# EUROPÄISCHE PATENTSCHRIFT

(11) **EP 2 794 769 B1**
(45) Veröffentlichungstag und Bekanntmachung des Hinweises auf die Patenterteilung: **14.09.2016**
(21) Anmeldenummer: 12812953.3
(22) Anmeldetag: 20.12.2012
(51) Int. Cl.: C09D 5/00

(54) **PIGMENTIERTES, FEINSTRUKTURIERTES TRIBOLOGISCHES KOMPOSITMATERIAL**
PIGMENTED, FINE-STRUCTURED, TRIBOLOGICAL COMPOSITE MATERIAL
MATÉRIAU COMPOSITE TRIBOLOGIQUE PIGMENTÉ À STRUCTURE FINE

(30) Priorität: 21.12.2011 DE 102011056761
(43) Veröffentlichungstag der Anmeldung: 29.10.2014
(73) Patentinhaber: Leibniz-Institut für Neue Materialien gemeinnützige GmbH, 66123 Saarbrücken (DE)
(72) Erfinder: BECKER-WILLINGER, Carsten, 66130 Saarbrücken (DE); HOLLMANN, Frank, 86485 Biberach (DE); KASPER, Christoph, 66583 Spiesen-Elversberg (DE)
(74) Vertreter: Patentanwälte Gierlich & Pischitzis Partnerschaft mbB
(86) Internationale Anmeldenummer: PCT/EP2012/076343
(87) Internationale Veröffentlichungsnummer: WO 2013/092835

(56) Entgegenhaltungen:
- WO-A2-2009/111049
- DE-A1- 10 326 815

## Beschreibung

Zur Verminderung der Reibung im Falle einer Relativbewegung zweier Oberflächen zueinander werden in aller Regel Fette und Öle als Schmiermittel eingesetzt. Diese so genannte hydrodynamische Schmierung führt zu sehr niedrigen Gleitkoeffizienten deutlich unter µ = 0,05. Da das Fett unter der auftretenden Flächenpressung im Laufe der Zeit von der Kontaktfläche zwischen den zwei Oberflächen verdrängt wird, bzw. durch Oxidationsprozesse und Verschmutzung verharzen kann, müssen die entsprechenden Oberflächen regelmäßig nachgefettet werden, um die Schmierwirkung aufrecht zu erhalten. Dies bedingt einen erhöhten Wartungsaufwand und einen zusätzlichen Kostenfaktor bei Anlagen, sowie im Falle einer nicht regelmäßigen Wartung möglicherweise den Ausfall von Komponenten. Gleitreibungsmindernde Beschichtungen bestehend aus einem polymeren Bindemittel und Festkörperschmierstoffen können alternativ dazu eingesetzt werden. Entscheidende Nachteile sind jedoch die in aller Regel höheren Gleitkoeffizienten mit Werten von µ = 0,1 - 0,2 und die Notwendigkeit der Balance zwischen möglichst niedriger Gleitreibung und einem kontrollierbaren Abrasionsverhalten der Schichten im Zusammenhang mit der Ausbildung des für die Schmierung wichtigen Transferfims. Im Falle korrodierender Substrate muss weiterhin für einen ausreichenden Korrosionsschutz gesorgt werden, da durch den Verzicht auf Fett die hydrophobe Schutzfunktion im Gesamtaufbau entfällt und damit Elektrolyte sowie Sauerstoff leichter Zutritt zur Substratoberfläche haben können. Die Einbringung von Abrasionsbeständigkeit und Korrosionsschutz geschieht in aller Regel über die Eindispergierung geeigneter anorganischer Teilchen, die in ihren derzeitig verfügbaren Formen zwar ihre Schutzfunktion erfüllen, allerdings daneben einen negativen Einfluss auf die Schmierwirkung des Schichtsystems ausüben, was die resultierenden Zusammensetzungen in den meisten Fällen für eine praktische Anwendung uninteressant macht.

US 4694038 A (Boeing) beansprucht eine gleitreibungsmindernde Beschichtung bestehend aus einem Polyurethan-Bindemittel und 20 - 40 Gew. % amorphen Graphitpartikeln geeignet zur Oberflächenausrüstung von Elastomeren. Die Verwendung eines Polyurethan-Bindemittels ermöglicht eine gute Haftung zum Substrat zu erzielen. Nachteilig ist jedoch, dass die Graphitpartikel gleichmäßig über die Dicke des Beschichtungsmaterials verteilt sind. Somit wird zwar - dadurch, dass sich der Graphit schichtförmig abtragen lässt - die gewünschte niedrige Gleitreibung zur Außenseite der Beschichtung erreicht, gleichzeitig aber führt die Anwesenheit des Graphits in der Nähe der Grenzschicht zum Untergrund zu einer Verringerung der Schichthaftung zum Substratmaterial, welche nur durch Verwendung entsprechend reaktionsfähiger Bindemittel (Polyurethane) einigermaßen kontrolliert werden kann. Weiterhin werden die Schichtsysteme durch den hohen Gehalt an Festschmierstoff relativ weich, was bei hohen Flächenpressungen leicht zu Schichtversagen durch Mikropflügen führen kann.

Mit einem ähnlichen Prinzip der gleichmäßigen Partikelverteilung über die Bindemittelmatrix beansprucht US 5789523 A (Du-Pont) eine Polyimid-Zusammensetzung mit inkorporierten weichen Schichtsilikaten (Mohs - Härte 1-5) und Carbonfasern sowie optional enthaltenen Festkörperschmierstoffen mit verbesserter Gleitreibung und verbesserter Abriebfestigkeit zur Erzeugung von Spritzgussteilen mit eingebauter tribologischer Wirkung. Die Schichtsilikate sollen die Standfestigkeit der Kompositmaterialien verbessern. Gleichzeitig werden durch die Gleichverteilung der anorganischen Zusätze über die organische PolyimidMatrix und die gleichzeitig erforderlichen hohen Füllgrade an Zusätzen zur Erzielung geeigneter tribologischer Oberflächeneigenschaften, die mechanischen und thermischen Bulk-Eigenschaften des erzeugten Formteils wie z.B. der E-Modul oder der thermische Ausdehnungskoeffizient ebenfalls deutlich beeinflusst, was in einigen Anwendungen durchaus unerwünscht sein kann.

Im Gegensatz zu den vorgenannten Stellen bei denen die plättchenförmigen Teilchen unter Verwendung von Scherkräften ledig mechanisch dispergiert werden, wird im Falle der WO 2002005293 A2 (EMTEC Magnetic) eine elektrisch leitfähige Schicht aus Graphit und einem Bindemittel beansprucht, der ein Polyurethan-Dispergierharz zugesetzt wird, welches mindestens eine polare funktionelle Gruppe entlang der Polymerhauptkette trägt, die mit der Oberfläche des plättchenförmigen Graphitfüllstoffs wechselwirken kann und auch in der Lage ist, entsprechende Graphit-Interkalationsverbindungen zu bilden. Diese Art der Modifizierung führt ebenfalls zu einer Gleichverteilung der Teilchen über die Bindemittelmatrix, mit in aller Regel feinerer Partikelgrößen-Verteilung, als im Falle der rein mechanischen Dispergierung über Scherkräfte. Eine derartige Morphologie ist auch gewünscht, um eine gute elektrische Leitfähigkeit zu erzielen. Tribologische Eigenschaften werden allerdings nicht beansprucht.

Auch werden derartige Gleitlacke aus Festkörperschmierstoffen und polymeren Bindemitteln zur mechanischen Verstärkung häufig mit Hartstoffpartikeln ausgerüstet (US 20040229759 A1 (Jet-Lube Inc.). Dieses Prinzip funktioniert zunächst einmal über eine einfache Mischungsregel. Problematisch ist allerdings, dass die Hartstoffpartikel in höherer Konzentration in aller Regel eine abrasive Wirkung auf das tribologische System ausüben, indem sie bei der Transferfilmbildung auf den Gegenkörper übertragen werden und im anschließenden Reibungsprozess zu einem höheren Verschleiß in der tribologichen Schicht führen können. US 4898905A (Taiho Kogyo) beansprucht ebenfalls eine Gleitlackzusammensetzung aus Polyimidmatrix, plättchenförmigen Festkörperschmierstoffen, plättchenförmigen silikatischen Zusatzstoffen und Öl. Auch in diesem Fall wird keine besondere Vorkehrung zur Erzeugung einer gezielten Teilchenanordnung über die Bindemittelmatrix angestrebt und auch nicht erzielt. Über das verwendete Öl wird eine hydrodynamische Schmiermittelkomponente in das System eingebracht, wodurch insbesondere das Anfangsreibungsverhalten und das Niveau des Gleitreibungskoeffizienten beeinflusst werden kann. Nachteilig ist, dass das Öl in der Schicht diffundieren kann und über die Zeit aus dem System ausgetragen wird. Dadurch ist der Wirkeffekt nicht von großer Dauer.

US 3809442 (3M), EP 1350817 A1 (Ford Motor Comp.) und WO 2005010107 A1 (TNO) beanspruchen Gleitlacke aus Kombinationen verschiedener Festkörperschmierstoffe mit Bindemitteln, die auf Niedertempera¬turanwendungen und Beschichtung von temperaturempfindlichen Substraten ausgelegt sind. WO 2005010107 A1 benötigt noch ein zusätzliches Gleitadditiv auf Polysiloxan -, Polyolefinwax - bzw. PTFE - Basis. Dabei ist es für die Wirksamkeit des Additivs erforderlich, dass dieses nicht mit den Festkörperschmierstoffen wechselwirkt und ungehindert an die Phasengrenze Schicht/Luft diffundieren kann. Eine besondere morphologische Anordnung der partikulären Bestandteile ist für die Wirksamkeit der Beschichtung nicht entscheidend. Das Additiv führt lediglich zu einer hydrodynamischen Komponente bezüglich der Schmierung analog wie oben beschrieben.

Polymermatrix Komposite mit verstärkenden Partikeln werden auch für abrasionsbeständige Antihaftbeschichtungen beschrieben.

EP 1718690 beansprucht abrasionsfeste Niedrigenergieschichten mit einer erhöhten Alkalibeständigkeit. Die stoffliche Zusammensetzung umfasst ein härtbares organisches Bindemittelsystem, mindestens.ein funktionalisiertes fluorhaltiges Polymer oder Oligomer welches mit dem Bindemittel reaktionsfähig ist, sowie anorganische Teilchen.

Tribologische Eigenschaften können wegen der Abrasivität der Hartstoffpartikel nicht abgeleitet werden und sind auch nicht beansprucht. Anorganische Festkörperschmierstoffe werden ebenfalls nicht beschrieben.

Durch die vorliegende Erfindung konnte ein tribologisch wirksames Schichtsystem bereitgestellt werden, welches bedingt durch seine besondere Struktur die oben genannten Nachteile klassischer Gleitlacke ausgleicht.

Die Aufgabe der vorliegenden Erfindung bestand darin, ein pigmentiertes, feinstrukturiertes tribologisches Kompositmaterial bereitzustellen, welches einen niedrigen Gleitreibungskoeffizienten mit einer exzellenten Haftung zum Untergrund und einer ausgezeichneten Abrasions- und Verschleißbeständigkeit, verbunden mit einer hohen Barrierefunktion gegenüber der Diffusion von Wasserdampf und Gasen sowie korrosiven Medien, in sich vereinigt.

### Lösung

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht. Die Erfindungen umfassen auch alle sinnvollen und insbesondere alle erwähnten Kombinationen von unabhängigen und/oder abhängigen Ansprüchen.

Die Problemstellung konnte durch die Bereitstellung einer Zusammensetzung umfassend mindestens einen plättchenförmigen Festkörperschmierstoff, mindestens einen Typ anorganischer plättchenförmiger Pigmentteilchen, wobei die Pigmentteilchen eine Dicke von 0,5 µm bis 2 µm und ein mittleres Aspektverhältnis ≥ 10 aufweisen, mindestens eine oberflächenaktive Verbindung, wobei die oberflächenaktive Verbindung ausgewählt ist aus der Gruppe umfassend Ammoniumalkylverbindungen, Phosphoniumalkylverbindungen, Sulfoniumalkylverbindungen, Imidazoliniumverbindungen, Pyridiniumverbindungen, Pyrrolidiniumverbindungen, ionische Flüssigkeiten, funktionalisierte fluorhaltige Polymere, Polyether und funktionalisierte Polysiloxane und ein härtbares Bindemittelsystem umfassend mindestens ein organisches Polymer oder Oligomer mit einer oder mehreren funktionellen Gruppen oder eine Vorstufe davon gelöst werden.

Der Festkörperschmierstoff besteht aus plättchenförmigen Teilchen. Als plättchenförmig wird ein Teilchen verstanden, welches ein Verhältnis von durchschnittlichen Durchmesser zur Dicke von über 3:1, bevorzugt zwischen 2:1 und 1000:1. Alle Längen können mit TEM gemessen werden.

In einer bevorzugten Weiterbildung der Erfindung hat der Festkörperschmierstoff eine Dicke zwischen 50 nm und 1000 nm und ein Aspektverhältnis von ≥ 5, bevorzugt ein Aspektverhältnis von 5 bis 20.

Die Festkörperschmierstoffteilchen haben eine Größe von 50 nm bis 20 µm, bevorzugt von 700 nm bis 5 µm.

Der Festkörperschmierstoff kann dabei ein üblicher Festkörperschmierstoff sein. Dies können Festkörperschmierstoffe, wie natürlicher Graphit, synthetischer Graphit, Graphen, hexagonales Bornitrid, turbostratisches Bornitrid, Molybdändisulfid und/oder Wolframdisulfid sein.

Darüber hinaus können auch zusätzlich rein organische Festkörperschmierstoffe wie Perfluoropolymer, Polytetrafluorethylen (PTFE) und/oder Polyethylen zugegeben werden. Diese können das Stick-Slip-Verhalten der gehärteten Beschichtung beeinflussen.

Ein bevorzugter Festkörperschmierstoff ist hexagonales Bornitrid.

Der mindestens eine Festkörperschmierstoff wird bevorzugt in einem Anteil von 1 bis 40 Gew.-%, bevorzugt 20-30 Gew.-%, verwendet, wobei sich die Gew.-% auf alle Bestandteile außer dem Lösungsmittel beziehen.

Die erfindungsgemäße Zusammensetzung umfasst außerdem mindestens einen Typ anorganischer plättchenförmiger Pigmentteilchen.

Die Plättchen können aus üblichen Materialien bestehen. Dies können Metalle, Metalloxide oder andere anorganischen Verbindungen sein. Die Plättchen können auch aus organischen Materialien bestehen. Es ist dabei wichtig, dass die Plättchen nur eine geringe Variation bezüglich ihrer Dicke aufweisen.

Beispiele für Trägermatialien sind Mica, Glas, Siliziumdioxid, Titandioxid und Aluminiumoxid.

Die Pigmentteilchen können auch beschichtet sein.

Die Pigmentteilchen weisen ein ähnliches Aspektverhältnis auf, wie für die Festkörperschmierstoffe beschrieben.

In einer bevorzugten Weiterbildung der Erfindung weisen die Pigmentteilchen ein Aspektverhältnis von ≥ 10, bevorzugt zwischen 10:1 und 50:1.

In einer bevorzugten Weiterbildung der Erfindung liegt der durchschnittliche Durchmesser der Pigmentteilchen zwischen 1 und 500 µm, bevorzugt zwischen 5 und 200 µm, besonders bevorzugt zwischen 10 und 150 µm.

Es können auch kleinere Pigmentteilchen mit einem Durchmesser zwischen 1 und 100 µm, bevorzugt zwischen 5 und 60 µm, besonders bevorzugt zwischen 1 und 15 µm.

Die durchschnittliche Dicke der Pigmentteilchen liegt zwischen 0.1 und 5 µm, bevorzugt zwischen 0.5 und 2 µm.

Die Pigmentteilchen weisen ein Aspektverhältnis von ≥ 10, bevorzugt zwischen 10:1 und 50:1, und eine Dicke von 0,5 µm bis 2 µm auf.

Der mindestens eine Typ an plättchenförmigen Pigmentteilchen wird bevorzugt in einem Anteil von 1 bis 40 Gew.-%, bevorzugt 2-10 Gew.-%, verwendet, wobei sich die Gew.-% auf alle Bestandteile außer dem Lösungsmittel beziehen.

In einer bevorzugten Weiterbildung der Erfindung besteht die Oberfläche der Pigmentteilchen mindestens teilweise aus einem Übergangsmetalloxid. Bevorzugt bestehen mindestens die Oberflächen der beiden flächigen Seiten der Pigmente aus einem Übergangsmetalloxid.

Dies kann dadurch erreicht werden, dass das gesamte Pigmentteilchen aus dem Übergangsmetalloxid besteht oder dass ein Trägermaterial mit diesem Übergangsmetalloxid beschichtet ist. Es können auch mehrere verschiedene Übergangsmetalloxide vorhanden sein.

In einer bevorzugten Weiterbildung der Erfindung ist das Übergangsmetalloxid ausgewählt aus der Gruppe umfassend TiO₂, ZrO₂, ZnO und FeOₓ.

Falls die Pigmentteilchen beschichtet sind, ist die Übergangsmetalloxidschicht zwischen 10 nm und 1000 nm dick, bevorzugt zwischen 50 nm und 300 nm.

Die Zusammensetzung enthält außerdem mindestens eine oberflächenaktive Verbindung, welche über mindestens eine hydrophobe Gruppe und mindestens eine hydrophile Gruppe verfügt.

Oberflächenaktive Verbindungen sind Verbindungen, welche sowohl über eine hydrophobe, als auch über eine hydrophile Gruppe verfügen. Daher sind sie in der Lage sich an Grenzflächen anzureichern. Im Falle einer hydrophoben Oberfläche würde beispielsweise die hydrophobe Gruppe der oberflächenaktiven Verbindung mit dieser Oberfläche wechselwirken und beispielsweise über van-der-Waals-Kräfte mit dieser Oberfläche reagieren. Durch die hydrophilen Gruppen der oberflächenaktiven Verbindung wird auf diese Weise auch die so belegte Oberfläche hydrophiler. Im Falle hydrophiler Oberflächen gilt das Umgekehrte.

Im Falle der Erfindung reagiert die mindestens eine oberflächenaktive Verbindung mit der Oberfläche des Festkörperschmierstoffs. Diese Festkörperschmierstoffe sind häufig eher hydrophob, wie beispielsweise Bornitrid oder Graphit. Durch die oberflächenaktive Verbindung ist es möglich die Kompatibilität des Festkörperschmierstoffs mit einer hydrophilen Umgebung zu verbessern.

Durch diese Modifizierung der Festkörperschmierstoffe und/oder der Pigmentteilchen durch die oberflächenaktive Verbindung wird erreicht, dass unter Einwirkung geringer Scherkräfte eine innige Abfolge von schichtförmigen Festkörperschmierstoff-Einheiten und anorganischen Plättchen im fertigen Polymer-Komposit erreicht wird. Insbesondere wenn die Pigmentteilchen Übergangsmetalloxide enthalten, können temporäre Komplexbindungen zu der hydrophilen Gruppe der oberflächenaktiven Verbindung aufgebaut werden, so dass in den Zwischenschichten zwischen Festköperschmierstoffpartikeln und anorganischen Plättchen ein Quasi-Transferfilm gebildet wird. Das Gesamtsystem gleitet letztendlich auf der Vielzahl der Quasi-Transferfilme, welche in senkrechter Richtung zur Schichtoberfläche übereinander zu liegen kommen.

Die oberflächenaktive Verbindung weist mindestens eine hydrophile Gruppe auf. Eine solche Gruppe kann beispielsweise eine Hydroxylgruppe, Ethergruppe, Estergruppe, Carbonsäure-, Amino-, Ammonium-, Guanidinium-, Imidazolium-, Pyridinium-, Pyrrolidinium-, Phosphonium- oder Sulfoniumgruppe sein.

Die oberflächenaktive Verbindung weist außerdem mindestens eine hydrophobe Gruppe auf. Dies können substituierte oder unsubstituierte, verzweigte oder unverzweigte Alkylgruppen sein, bevorzugt mit 4 bis 30 Kohlenstoffatomen. Sie können auch Doppelbindungen enthalten. Es kann sich auch um Polyetherverbindungen sowie Polysiloxane handeln, welche ebenfalls substituiert sein können.

Die hydrophobe Gruppe kann auch aromatische Reste aufweisen, welche mit der Oberfläche des Festkörperschmierstoffs in Wechselwirkung treten können.

Die oberflächenaktive Verbindung kann auch ein Polymer oder Oligomer sein, welches über die genannten Gruppen verfügt.

Die oberflächenaktive Verbindung kann entweder über die schon vorhandenen hydrophoben oder hydrophilen Gruppen oder mindestens eine weitere Art von Gruppen mit dem Bindemittelsystem reagieren und so in die Polymermatrix integriert werden.

Die oberflächenaktive Verbindung ist ausgewählt aus der Gruppe umfassend Ammoniumalkyl-, Phosphoniumalkyl-, Sulfoniumalkyl-, Imidazoliumalkyl-, Pyridiniumalkyl-, Pyrrolidiniumverbindungen, ionische Flüssigkeiten, funktionalisierte fluorhaltige Polymere, Polyether und funktionalisierte Polysiloxane.

Die fluorhaltigen Polymere umfassen mindestens ein fluorhaltiges Polymer oder Oligomer mit mindestens einer hydrophilen Gruppe. Es handelt sich bevorzugt um Oligomere, insbesondere funktionelle kurzkettige Fluoroligomere, wobei die funktionelle Gruppe bevorzugt eine Carboxylgruppe und besonders bevorzugt eine Hydroxylgruppe ist.

Es eignen sich alle Polymere oder Oligomere, die fluorhaltig sind und mindestens eine hydrophile Gruppe aufweisen. Die hydrophile Gruppe kann auch zur Anbindung an das Bindemittelsystem genutzt werden.

Zweckmäßig sind hier fluorierte Polyether, insbesondere Perfluorpolyether. Andere Beispiele sind fluorierte Epoxide und fluorierte Polyurethane. Ein Beispiel für ein Monomer, dass sich zur Einführung von Fluoratomen in Epoxid- oder Polyurethanharz-Systemen eignet, ist der Diglycidylether von 1,3,5-Fluoralkylbenzol.

Ferner können Copolymere verwendet werden, wobei eine Monomersorte fluorhaltig ist, z.B. übliche Fluormonomere, wie Tetrafluorethylen, Perfluorpropylen, Trifluorchlorethylen, Vinylidenfluorid und Hexafluorpropylen, und eine Monomersorte damit copolymerisierbar ist und eine funktionelle Gruppe umfasst, wie z.B. Vinylverbindungen, die über eine funktionelle Gruppe verfügen, wie Vinylether, Vinylester, Vinylalkohole, Vinylacetate, Vinylamine, die eine funktionelle Gruppe aufweisen oder damit substituiert sind. Ein Beispiel ist ein Fluorethylen-Alkylvinylether-Copolymer, wobei die Alkylgruppe (z.B. lineares oder verzweigtes C₁-C₈-Alkyl, wie Methyl, Ethyl, n-Propyl, Isopropyl oder n-, sek.- oder tert.-Butyl) mit einer geeigneten funktionellen Gruppe, wie z.B. OH, COOH oder Oxyalkylol ([-O-(CH₂)ₙ]ₓ-OH, worin n gleich oder verschieden und 1 bis 8 ist und x 1 bis 3 ist) substituiert ist. Das Fluorethylen kann z.B. Tetrafluorethylen oder Trifluorchlorethylen sein. Im Copolymer können ein Alkylvinylether oder verschiedene Alkylvinylether, z.B. solche mit funktioneller Gruppe und solche ohne funktionelle Gruppe, enthalten sein. Es können auch Copolymere von Tetrafluorethylen und Perfluoralkylvinylethern Anwendung finden.

Über die Copolymerisation sind auch Sulfonsäure- oder Phosposphonsäuregruppen einführbar, z.B. durch Copolymerisation von Tetrafluorethylen mit Trifluorvinylsulfochlorid oder Perfluorvinylethersulfofluoriden. Polytetrafluorethylen ist auch durch Propfpolymerisation mit oben genannten Vinylverbindungen oder Acrylsäuren funktionalisierbar.

Solche fluorhaltigen Polymere oder Oligomere mit funktionellen Gruppen sind im Handel erhältlich, z.B. Lumiflon® von Asahi Glass Co. Ltd. oder Fluorolink® von Solvay Solexis. Bevorzugte fluorhaltige Polymere oder Oligomere mit mindestens einer funktionellen Gruppe sind fluorierte Polyether, bevorzugt Perfluorpolyether, und Fluorethylen-Alkylvinylether-Copolymere, wobei das Fluorethylen bevorzugt Tetrafluorethylen und/oder Trifluormonochlorethylen ist.

Das fluorhaltige Polymer oder Oligomer kann eine oder mehr funktionelle Gruppen aufweisen. Als funktionelle Gruppen eignen sich prinzipiell Hydroxy-, Amino-, Carboxyl-, Säureanhydridgruppen-, Epoxid-, Isocyanatgruppen, Säurechloridgruppen, Nitril-, Isonitril- und SH-Gruppen. Ferner sind auch -SO₃H-Gruppen und -PO₃H-Gruppen geeignet. Bevorzugt sind Amino-, Hydroxy- und Carboxygruppen, wobei Carboxy- und insbesondere Hydroxygruppen bevorzugt sind.

Polysiloxane sind synthetische polymere Verbindungen, in denen Siliziumatome über Sauerstoff-Atome ketten- und/oder netzartig verknüpft und die restlichen Valenzen des Siliziums durch Kohlenwasserstoff-Reste (meist Methyl-, seltener Ethyl-, Propyl-, Phenylgruppen u. a.) abgesättigt sind. Solche Verbindungen werden aufgrund der organischen Reste auch als Polyorganosiloxane bezeichnet. Eine bevorzugte Verbindung sind Polyorganosiloxane, welche mit hydrophilen Gruppen terminiert sind. Als solche Gruppen eignen sich prinzipiell Hydroxy-, Amino-, Carboxyl-, Säureanhydridgruppen-, Epoxid-, Isocyanatgruppen, Säurechloridgruppen, Nitril-, Isonitril- und SH-Gruppen. Ferner sind auch - SO₃H-Gruppen und -PO₃H-Gruppen geeignet. Bevorzugt sind Amino-, Hydroxy- und Carboxygruppen, wobei Carboxy- und insbesondere Hydroxygruppen bevorzugt sind.

Bevorzugte Polyorganosiloxane sind Polydimethylsiloxane, Polyphenylmethylsiloxane oder Polydialkoxydimethylsiloxane.

Weitere bevorzugte Verbindungen sind Polyetherverbindungen, welche ebenfalls mit den genannten Gruppen terminiert sein können. Dies sind Polymere oder Oligomere, welche Ethergruppen enthalten. In der Regel bestehen sie aus geradkettigen oder verzweigten C₂-C₈-Einheiten, welche über Sauerstoffatome miteinander verbunden sind. Bevorzugt ist jede Einheit über genau 2 Sauerstoffatome mit der weiteren Einheit verbunden, so dass sich eine lineare Kette ergibt. Beispiele für solche Einheiten sind Ethylen, n-Propylen, Isopropylen, Butylen, Isobutylen, Pentylen, Isopentylen, Hexylen, Isohexylen, Heptylen, Isoheptylen. Die einzelnen Einheiten können auch weitere funktionelle Gruppen tragen oder substituiert sein. z.B. mit Chlor oder Fluoratomen.

Eine Polyetherverbindung kann auch mehrere unterschiedliche Einheiten enthalten, z.B. im Falle eines Blockpolymers.

Bevorzugte Polyetherverbindungen sind Polyetherverbindungen mit Ethylen- (PEG), Propylen- und/oder Isopropylen-Einheiten (PPG).

Bevorzugte Verbindungen sind Polyoxyethylen-Polyoxypropylen-Blockpolymere (CAS-Nr. 9003-11-6) mit folgender Struktur:

HO (CH₂CH₂O)ₓ-(-CH(CH₃)CH₂O-)_{y}-(CH₂CH₂O)_{z}H

wobei x, y und z ganze Zahlen aus dem Bereich von 2 bis 130, insbesondere von 15 bis 100 darstellen und x und z gleich sind, aber unabhängig von y gewählt werden.

Das Molekulargewicht der oberflächenaktiven Verbindungen kann in weiten Bereichen variieren. Sofern Oligomere eingesetzt werden, kann z.B. häufig ein zweckmäßiges Molekulargewicht (Gewichtsmittel) im Bereich von mindestens 100, zweckmäßiger mindestens 500 oder bevorzugt mindestens 600, und unabhängig davon bis zu 5.000, zweckmäßiger bis zu 3.000 und bevorzugt bis zu 1.500 oder bis zu 1.000 sein.

Im Falle von Polyorganosiloxanen sind dies Verbindungen mit 3 bis 20 Siloxaneinheiten, bevorzugt 5 bis 10 Siloxaneinheiten. In der Regel wird ein Gemisch aus mehreren unterschiedlich langen Polyorgansiloxanen eingesetzt.

Die mindestens oberflächenaktive Verbindung wird bevorzugt in einem Anteil von 0,2 bis 15 Gew.-%, bevorzugt 5-10 Gew.-%, verwendet, wobei sich die Gew.-% auf alle Bestandteile außer dem Lösungsmittel beziehen.

Die Zusammensetzung umfasst außerdem ein härtbares Bindemittelsystem ein härtbares Bindemittelsystem umfassend mindestens ein organisches Polymer oder Oligomer mit einer oder mehreren funktionellen Gruppen oder eine Vorstufe davon. Dabei kann es sich um die üblichen, für Beschichtungszusammensetzungen oder für Formmassen verwendeten Bindemittelsysteme handeln. Die Bindemittelsysteme umfassen insbesondere die üblichen organischen Harze. Die Bindemittelsysteme können physikalisch oder bevorzugt chemisch härtende Systeme sein. Es kann sich um oxidativ härtende, kalthärtende oder um thermisch oder durch Bestrahlung härtende Systeme handeln. Es kann sich um Ein- oder Zweikomponentenlacke handeln. Bevorzugt handelt es sich um chemisch härtende oder vernetzbare Bindemittelsysteme. Solche härtbaren Bindemittelsysteme sind dem Fachmann geläufig.

Bei den einsetzbaren Bindemittelsystemen oder Lacken bzw. den dafür verwendeten Polymeren oder Oligomeren oder Vorstufen davon handelt es sich z.B. um die üblichen, aus dem Stand der Technik bekannten Bindemittelsysteme, wie sie z.B. in Ullmanns, Encyklopädie der technischen Chemie, Bd. 15, 4. Aufl., 1978, S. 589 ff., beschrieben sind. Insbesondere handelt es sich um organische Polymere, Oligomere oder Vorstufen davon. Unter den Vorstufen der Polymere oder Oligomere werden die Monomere oder daraus gebildete niedermolekulare Polymerisations-, Kondensations- oder Additionsprodukte verstanden, von denen die Polymere oder Oligomere abgeleitet sind.

Beispiele für Bindemittelsysteme oder Lacke bzw. die dafür verwendeten organische Polymere oder Oligomere sind Öllacke, die Öle, wie z.B. Leinöl, Holzöl oder Sojaöl enthalten, die gegebenenfalls mit Polybutadienölen modifiziert sind; Nitrocellulose-Lacke, die Nitrocellulosen enthalten; Lacke aus Celluloseester organischer Säuren, wie Ester der Cellulose mit Essigsäure oder Buttersäure oder die Anhydride davon, wobei z.B. Celluloseacetobutyrate auch in Polyurethanlacken Verwendung finden; Chlorkautschuk-Lacke, die z.B. chloriertes Polyisopren, Polypropylen oder Polyethylen enthalten; Lacke aus Polyvinylverbindungen bzw. Polyvinylharzen, wie Polyolefine, z.B. Polyethylen, Ethylen-Vinylacetat-Copolymere und Ethylen-Maleinsäure(anhydrid)-Copolymere, PVC, Polyvinylidenchlorid, Polyvinylalkohol, Polyvinylacetale, z.B. Polyvinylbutyral, Polyvinylether, z.B. Methyl- oder Ethylether, Polyvinylester, z.B. Polyvinylacetat (PVA) und Polyethylenterephthalat, Polyvinylpyrrolidon, Polystyrol, Styrol-Acrylnitril-Copolymere (SAN), AcrylnitrilButadien-Styrol-Copolymere (ABS), Styrol-Maleinsäureester-Copolymere, Styrol-Butadien-Copolymere und Styrol-Maleinsäureanhydrid-Copolymere; Lacke auf Basis von Acrylharzen, wie Polyacrylsäure, Polymethacrylsäure, Polyacrylamid, Acrylester oder Methacrylester, z.B. Polymethyl(meth)acrylat; Alkydharze, die zweibasische Säuren oder Anhydride, wie Phthalsäure und Phtalsäureanhydrid, und Polyole oder Kondensationsproduke davon enthalten, die öl- oder fettsäuremodifiziert sind; gesättigte Polyesterharz-Lacke, die gesättigte Polyester aus gesättigten Monomeren mit zwei oder mehr funktionellen Gruppen (OH- und/oder COOH-Gruppen) enthalten; PolyurethanLacke, die häufig als Zweikomponentensysteme verwendet werden, die blockierte oder unblockierte Polyisocyanate und Polyhydroxylverbindungen enthalten; Epoxidharz-Lacke, wie Bisphenol-A-Harze, Bisphenol-F-Harze, aliphatische und heterocyclische Epoxidharze oder thermoplastische Epoxidlackharze; Siliconharz-Lacke; Harnstoff-, Melamin-, Phenoxy- und Phenolharz-Lacke; sowie Polyester, Polyarylate, Polyamide, Polyether, Polyimide, Polyamidimide, Polybenzimidazole, Polyharnstoff und Polycarbonate. Es können auch Kombinationen dieser Lacke bzw. dieser Polymere verwendet werden. Es können immer auch die Vorstufen, wie z.B. die Monomere der genannten Polymere oder Oligomere, eingesetzt werden.

Bevorzugte Bindemittelsysteme sind Polyurethanharz-Lacke und Polyepoxidharz-Lacke. Weiter sind Polyamide, Polyimide, Polyamidimide oder Polybenzimidazole oder deren Vorstufen ebenfalls bevorzugt, insbesondere da hiermit besonders hochtemperaturstabile Systeme erhalten werden können, wobei solche bevorzugt sind, die aromatische Gruppen enthalten. Die aromatischen Gruppen können aufgrund ihres planaren Aufbaus und ihres delokalisierten π-Elektronensystems mit den Plättchen des Festkörperschmierstoffs wechselwirken und sind daher besonders vorteilhaft für die tribologischen Eigenschaften des Komposits, da sie dessen feine Verteilung über die Matrix und die Transferfilmbildung begünstigen.

Das Bindemittel umfasst ein organisches Polymer oder Oligomer oder eine Vorstufe davon mit einer oder mehreren funktionellen Gruppen. Beispiele für zweckmäßige funktionelle Gruppen sind C-C-Doppelbindungen, Hydroxy-, Amino-, Carboxyl-, Säureanhydrid-, Epoxid- und/oder Isocyanatgruppen. Weitere Beispiele sind Säurechloridgruppen, Nitril-, Isonitril- und SH-Gruppen.

Selbstverständlich werden die funktionellen Gruppen so gewählt, dass die gewünschten Härtungsreaktionen stattfinden können. Es kann nur eine funktionelle Gruppe vorhanden sein, die mit sich selbst reaktiv ist, oder zwei oder mehr Gruppen, die miteinander reaktionsfähig sind. Die Gruppen können an den gleichen oder an unterschiedlichen Polymeren, Oligomeren oder Vorstufen davon vorliegen oder eine Gruppe kann über einen Härter oder Vernetzen eingeführt werden. Die Zusammenhänge sind dem Fachmann bekannt. Das Bindemittelsystem umfasst auch die gegebenenfalls eingesetzten Härter oder Vernetzer. Bevorzugt ist es eine dieser funktionellen Gruppen, die mit einer funktionellen Gruppe des fluorhaltigen Polymers oder Oligomers reaktionsfähig ist. Es kann aber auch eine davon unabhängige funktionelle Gruppe sein, die nur mit der funktionellen Gruppe des fluorhaltigen Polymers oder Oligomers reaktionsfähig ist.

Bevorzugt eingesetzte organische Polymere oder Oligomere oder Vorstufen davon, wie Monomere, sind Polyepoxide, Polyole, unblockierte oder insbesondere blockierte Polyisocyanate, Polyester, Polyamine, Polycarbonsäuren oder Polycarbonsäureanhydride, die jeweils zwei oder mehr funktionelle Gruppen enthalten. Hier besitzt sich der Ausdruck "Poly" auf die funktionelle Gruppe und nicht auf den Polymerisationsgrad. Dementsprechend besitzen die Polyole zwei oder mehr Hydroxygruppen und es kann sich um ein Monomer, Oligomer oder Polymer (z.B. ein Polyurethan) handeln. Konkrete Komponenten werden im Folgenden an bevorzugten Bindemittelsystemen beispielhaft veranschaulicht.

Polyisocyanate werden z.B, für Polyurethanharze verwendet. Das Polyisocyanat kann zwei oder mehr Isocyanatgruppen aufweisen. Es kann z.B. aliphatisch, alicyclisch, aromatisch oder heterocyclisch, monocyclisch oder polycyclisch sein.

Es können übliche Polyisocyanate verwendet werden, z.B. monomere Polyisocyanate, Polyisocyanat-Addukte, sogenannte modifizierte Polyisocyanate oder Mischungen davon. Diese sind dem Fachmann bekannt und im Handel erhältlich und z.B. in G. Oertel, Polyurethane Handbook, Hanser-Verlag 1993 und in "Methoden der organischen Chemie" (Houben-Weyl), Bd. 14/2, Thieme Verlag, 1963, beschrieben. Die Addukte können z.B. eine mittlere NCO-Funktionalität von 2 bis 6, bevorzugt 2,4 bis 4 aufweisen.

Bei den Polyisocyanat-Addukten handelt es sich z.B. um solche, die üblicherweise als Härter für zweikomponentige Urethanlacke Verwendung finden und in "Lackharze: Chemie, Eigenschaften und Anwendungen", Hrsg. D. Stoye, W. Freitag, Hanser Verlag München, Wien, 1996, beschreiben sind.

Beispiele für geeignete Polyisocyanate sind die aus der Polyurethanchemie bekannten Diisocyanate, wie z.B. 1,3-Diisocyanatobenzol, 2,4 und 2,6-Toluylendiisocyanat (TDI), 1,6-Hexamethylendiisocyanat (HMDI), 4,4'- und 2,4-Diphenylmethandiisocyanat (MDI), Naphthylendiisocyanat, Xylylendiisocyanat, Isophorondiisocyanat, Paraphenyldiisocyanat, Dicyclohexylmethandiisocyanat, Cyclohexyldiisocyanat, Polymethylpolyphenylisocyanat, 1,6-Dodecamethylendiisocyanat, 1,4-Bis(isocyanatocyclohexyl)methan, Pentamethylendiisocyanat, Trimethylendiisocyanat, Triphenylmethandiisocyanat, sowie die aus diesen Diisocyanaten abgeleiteten höhermolekulare Polyisocyanate z.B. auf Isocyanurat-, Uretdion-, Allophanat- und Biuretbasis. Die Isocyanate sind z.B. unter den Handelsbezeichnungen Desmodur® und Baymidur® (von Bayer), CARADATE® (von Shell), TEDIMON® (von Enichem) und LUPRANAT® (von BASF) erhältlich. Beispiele für monomere Polyisocyanate mit mehr als zwei Isocyanatgruppen sind z.B. 4-Isocyanatomethyl-1,8-octandiisocyanat und aromatische Polyisocyanate wie 4,4',4" - Triphenylmethantriisocyanat oder Polyphenylpolymethylenpolyisocyanate.

Das Polyisocyanat kann in blockierter Form verwendet werden, um zu verhindern, dass eine unkontrolliert schnelle Reaktion einsetzt, und erst nach Entblockierung, z.B. durch Erwärmen, reaktiv werden. Die Blockierung von Isocyanaten ist ein dem Fachmann bekanntes Verfahren zur reversiblen Herabsetzung der Reaktivität von Isocyanaten. Zur Blockierung der Isocyanate kommen alle gängigen Blockierungsmittel in Betracht, wie z.B. Acetonoxim, Cyclohexanonoxim, Methylethylketoxim, Acetophenonoxim, Benzophenonoxim, 3,5-Dimethylpyrazol, 1,2,4-Triazol, Malonsäureethylester, Acetessigsäureethylester, &egr;-Caprolactam, Phenol oder Ethanol.

Als Polyolkomponente können reine Di-, Tri- oder Polyalkohole, wie z.B. Ethylenglycol, Trimethylolpropan, oder partiell verseifte Fettsäureglyceride verwendet werden. Diese werden aber gewöhnlich nur als Ausgangsbasis für höhermolekulare Polyhydroxylverbindungen verwendet. Hierbei kann es sich z.B. um mit Dicarbonsäuren entstehende, mehr oder weniger verzweigte Polyesterpolyole (Desmophen®-Typen) oder durch Anlagerung von Epoxiden entstehende Polyetherpolyole (Desmophen U®-Typen) handeln. Andere Beispiele sind hydroxyfunktionelle Acrylharze (Desmophen A®-Typen).

Aus den Polyisocyanaten und den Polyolen können Polyurethanharz-Lacke gebildet werden. Natürlich kann es vor allem bei unblockierten Polyisocyanaten erforderlich sein, die Komponenten erst kurz vor Gebrauch miteinander zu mischen. Polyisocyanate können auch mit Verbindungen mit anderen funktionellen Gruppen, die aktiven Wasserstoff enthalten, umgesetzt werden. Beispiele für diese Gruppen sind Thiolgruppen (-SH), primäre oder sekundäre Aminogruppen (-NHR', worin R' z.B. H, Alkyl, Cycloalkyl, Aryl und entsprechende Aralkyl- und Alkarylgruppen sein kann) oder Carboxylgruppen (-COOH). Als Reaktionsprodukte bilden sich bei der Umsetzung mit Isocyanaten Urethane (bei Hydroxyl und Carboxyl), Thiourethane (bei Thiol) oder Harnstoffe (bei Amin).

Beispiele für Polyepoxide sind Bisphenol-A-Harze (z.B. Kondensationsprodukte aus Bisphenol A und Epichlorhydrin), Bisphenol-F-Harze (z.B. Kondensationsprodukte aus Bisphenol F und Epichlorhydrin), aliphatische Epoxidharze (z.B. niedrig viskose Glycidylether), cycloaliphatische Epoxidharze und heterocyclische Epoxidharze (z.B. Triglycidylisocyanurat) oder thermoplastische Epoxidharz-Lacke. Häufig werden Polyepoxidharze für die Fimbildung mit Härtern versetzt, um eine Vernetzung zu erzielen. Als Härter kommen organische oder anorganische Verbindungen mit reaktionsfähigem Wasserstoff in Betracht, die mit Epoxid- oder Hydroxylgruppen reagieren können. Beispiel für eingesetzte Härter sind Polyamine, Polyaminoamidharze, Polyisocyanate, hydroxylhaltige Kunstharze, wie Harnstoff-, Melamin-, Phenoxy- und Phenolharze, Fettsäuren und organische Säuren mit reaktionsfähigen Doppelbindungen, wie Acrylsäure oder Methacrylsäure. Bei Einsatz der letztgenannten Härter kann die Vernetzung auch durch Elektronenstrahlung erfolgen.

Polyamide sind Kondensationsprodukte von Di- Tri- oder Tetraaminen und Di- oder Tetracarbonsäuren oder deren Derivaten, wobei aliphatische und/oder aromatische Verbindungen eingesetzt werden können. Polyamide mit aromatischen Einheiten sind insbesondere für die Interaktion mit den Festkörperschmierstoffen interessant. Auch Polyimide, z.B. Polykondensate aus aromatischen Diaminen, wie Benzidin, 4,4-Diaminodiphenylether oder 4,4'-Bis(3-aminophenoxy)diphenylsulfon, und aromatischen Tetracarbonsäuren oder deren Derivaten, wie 4,4'-Benzophenontetracarbonsäuredianhydrid oder Pyromellitsäuredianhydrid, und Polybenzimidazole, die Kondensationsprodukte aus aromatischen Tetraminen und Dicarbonsäuren oder deren Derivaten darstellen, sind besonders bevorzugt. In der erfindungsgemäßen Zusammensetzung können für die genannten Kunststoffe die entsprechenden Monomere oder niedermolekulare Kondensationsprodukte eingesetzt werden.

Das Bindemittelsystem wird bevorzugt in einem Anteil von 40 bis 80 Gew.-%, bevorzugt 40-60 Gew.-%, verwendet, wobei sich die Gew.-% auf alle Bestandteile außer dem Lösungsmittel beziehen.

In einer Weiterbildung der Erfindung umfasst die Zusammensetzung anorganische Teilchen. Für die Teilchen eignen sich praktisch alle keramischen und Glassysteme, aber auch gegebenenfalls Metalle, Halbleiter und übliche Füller. Es handelt sich bevorzugt um keramische Teilchen. Häufig werden Oxide, Nitride, Carbide, Carbonitride, Silicide oder Boride verwendet. Es können auch Mischungen verschiedener Teilchen verwendet werden. Bevorzugt werden abrasive Teilchen oder Hartstoffe, besonders bevorzugt gering abrasive Teilchen mit einer Universalhärte zwischen 1000 MPa und 3500 MPa, verwendet. Die Teilchen können an der Oberfläche modifiziert oder unmodifiziert sein.

Bei den Teilchen handelt es sich z.B. um Teilchen aus Metall, einschließlich Metalllegierungen, Halbmetall- (z.B. B, Si und Ge) oder Metallverbindungen, insbesondere Metallchalkogeniden, besonders bevorzugt die Oxide und Sulfide, Nitride, Carbide, Silicide und Boride. Es kann eine Art von Teilchen oder eine Mischung eingesetzt werden.

Beispiele sind (gegebenenfalls hydratisierte) Oxide wie ZnO, CdO, SiO₂, GeO₂, TiO₂, ZrO₂, CeO₂, SnO₂, Al₂O₃ (z.B. Amperit, Böhmit, AlO(OH), auch als Aluminiumhydroxid), B₂O₃, In₂O₃, La₂O₃, Fe₂O₃(z.B. Hämatit), Fe₃O₄, Cu₂O, Ta₂O₅, Nb₂O₅, V₂O₅, MoO₃ oder WO₃; weitere Chalkogenide, wie z.B. Sulfide (z.B. CdS, ZnS, PbS und Ag₂S), Selenide (z.B. GaSe, CdSe und ZnSe) und Telluride (z.B. ZnTe oder CdTe); Halogenide, wie AgCl, AgBr, AgI, CuCl, CuBr, CdI₂ und PbI₂; Carbide wie CdC₂, B₄C oder SiC; Arsenide, wie AlAs, GaAs und GeAs; Antimonide wie InSb; Nitride, wie Si₃N₄ und Ti₃N₄; Phosphide wie GaP, InP, Zn₃P₂ und Cd₃P₂; Phosphate, Silicate, Zirconate, Aluminate, Stannate und die entsprechenden Mischoxide (z.B. Indium-Zinn-Oxid (ITO), Antimon-Zinn-Oxid (ATO), fluor-dotiertes Zinnoxid (FTO), Leuchtpigmente mit Y-oder Eu-haltigen Verbindungen, Spinelle, Ferrite oder Mischoxide mit Perowskitstruktur wie BaTiO₃ und PbTiO₃).

Bevorzugt werden für die Teilchen harte Pulver verwendet. Beispiele für harte Pulver sind Pulver von Diamant, Granat, Bimsstein, Tripel, Siliziumcarbid, Schmirgel, Aluminiumoxide, wie z.B. Amperit und Korund, Siliziumoxide, wie Kieselgur, Quarz oder Schleifsande, Gips, Borcarbid und andere Oxide, Boride, Silicide, Carbide, Carbonitride und Nitride.

Bevorzugt bestehen die anorganischen Teilchen aus Si₃N₄, SiC, B₄C, Al₂O₃ und/oder SiO₂

Die Teilchengröße der Teilchen ist nicht besonders beschränkt. Zweckmäßigerweise liegt der mittlere Teilchendurchmesser z.B. im Bereich von mindestens 5 nm, bevorzugter mindestens 10 nm, bis nicht mehr als 100 µm, bevorzugter nicht mehr als 50 µm und besonders bevorzugt nicht mehr als 20 µm oder 10 µm. Es können auch Mischungen von Teilchen verschiedener Teilchengröße verwendet werden. Beispielsweise kann SiC UF-10 mit gröberen UF-05 und feineren UF-15 in Kombination verwendet werden.

In einer bevorzugten Weiterbildung liegt die mittlere Teilchengröße zwischen 0,1 und 3 µm.

Der mittlere Teilchendurchmesser bezieht sich auf das ermittelte Zahlenmittel. Die Teilchengrößen wurden mittels Rasterelektronenmikroskopie bestimmt.

Die anorganischen Teilchen werden bevorzugt in einem Anteil von 1 bis 15 Gew.-%, bevorzugt 2-10 Gew.-%, verwendet, wobei sich die Gew.-% auf alle Bestandteile außer dem Lösungsmittel beziehen.

In einer Weiterbildung der Erfindung weisen die anorganischen Teilchen eine Härte von 1.000 MPa bis 3.500 MPa, bevorzugt zwischen 1.200 MPa und 2.000 MPa, gemessen als Universalhärte (HU) auf.

Dabei kann es notwendig sein, die Härte der anorganischen Teilchen auf die anderen Komponenten, insbesondere der Pigmentteilchen abgestimmt werden muss. Dadurch kann die Beständigkeit der gehärteten Beschichtung verbessert werden, da die anorganischen Teilchen keine abrasive Wirkung auf die Pigmentteilchen ausüben können.

In dem so erhaltenen Kompositmaterial fügen sich die anorganischen Teilchen in die Zwischenlagen ein und führen zu einer zusätzlich Abstützung des Gesamtaufbaus, um so ein Mikropflügen des Gegenkörpers zu verhindern. Um diese Funktion optimal zu erfüllen, dürfen die Hartstoffteilchen gegenüber den anorganischen Plättchen nicht abrasiv wirken und sollten von ihrer Härte geeignet ausgewählt werden.

Durch die Feinstrukturierung der schichtförmigen Stoffe im beschriebenen Sinne werden Kompositmaterialien mit zusätzlich hoher Barrierefunktion erhalten, die guten Schutz des Substrates vor korrosivem Angriff bieten. Weiterhin orientieren die oberflächenaktiven Verbindungen durch ihre Wechselwirkung mit den anorganischen Pigmentteilchen und/oder ggf. anorganischen Teilchen diese tendenziell zur hydrophoben Luftseite, wodurch die tribologischen Funktionen an der Schichtoberfläche erreicht werden und die Schichten gleichzeitig wegen Anreicherung reaktiver Matrixbestandteile in Richtung Substrat eine gute Haftung zum Untergrund als notwendige Unterstützung eines guten Korrosionsschutzes aufweisen.

Die anorganischen Festkörperschmierstoffe sind dann schichtförmig zwischen den Pigmentplättchen angeordnet.

Die Zusammensetzung enthält üblicherweise mindestens ein Lösungsmittel, in welchem die Bestandteile gelöst, bzw. suspendiert, vorliegen.

Als Lösungsmittel (Dispergiermittel) können z.B. für Beschichtungen übliche Lösungsmittel verwendet werden. Ein geeignetes Lösungsmittel ist Wasser. Als organische Lösungsmittel eignen sich sowohl polare als auch unpolare und aprotische Lösungsmittel. Beispiele hierfür sind Alkohole, vorzugsweise niedere aliphatische Alkohole (C₁-C₈-Alkohole), wie Methanol, Ethanol, 1-Propanol, i-Propanol und 1-Butanol, Ketone, vorzugsweise aliphatische Ketone, wie Aceton, Methylketon und Methylisobutylketon, Ester, wie 2-Methoxypropylacetat, Butylacetat und Ethylacetat, Ether, vorzugsweise niedere Dialkylether, wie Diethylether, cyclische Ether, wie Dioxan oder THF, oder Monoether von Diolen, wie Ethylenglycol oder Propylenglycol, mit C₁-C₈-Alkoholen, aromatische oder aliphatische Kohlenwasserstoffe, wie Hexan, Heptan, Petrolether, Toluol und Xylol, Amide, wie Dimethylformamid, und deren Gemische. Bei Einsatz blockierter Isocyanate sollten protische Lösungsmittel einen Siedepunkt unterhalb der Deblockierungstemperatur des blockierten Isocyanats besitzen, um Nebenreaktionen zu minimieren. Beispiele sind aliphatische Alkohole mit 1 bis 4 Kohlenstoffatomen. Geeignet sind auch hochsiedende Lösungsmittel wie Methyl-2-pyrrolidon (NMP) oder γ-Butyrolacton (GBL).

Üblicherweise werden Lösungsmittel und/oder Gemische aus verschiedenen Lösungsmitteln bis zu Feststoffgehalten der Zusammensetzung zwischen 10 und 70 Gew.-%, bevorzugt zwischen 20 Gew.-% und 50 Gew.-% zugegeben. Die letztendliche Menge richtet sich u.a. nach der späteren Applikationsmethode.

In einer bevorzugten Weiterbildung der Erfindung enthält die Zusammensetzung folgende Bestandteile:
- 1-40 Gew.-% mindestens einen plättchenförmigen Festkörperschmierstoff;
- 0,2-15 Gew.-% oberflächenaktive Verbindung;
- 29-97,8 Gew.-% härtbares Bindemittelsystem;
- 1-40 Gew.-% anorganische plättchenförmige Pigmentteilchen;
- 0-15 Gew.-% anorganische Teilchen.

Die Zusammensetzung kann auch noch im Bereich von 0 - 5 Gew.-% weitere Additive enthalten. Die Gew.-%-Angaben beziehen sich auf die genannten Bestandteile ohne das Lösungsmittel der Zusammensetzung und ergänzen sich insgesamt zu 100 Gew.-%.

In einer bevorzugten Weiterbildung der Erfindung enthält die Zusammensetzung folgende Bestandteile:
- 20-30 Gew.-% mindestens einen plättchenförmigen Festkörperschmierstoff;
- 5-10 Gew.-% oberflächenaktive Verbindung;
- 40-71 Gew.-% härtbares Bindemittelsystem;
- 2-10 Gew.-% anorganische plättchenförmige Pigmentteilchen;
- 2-10 Gew.-% anorganische Teilchen.

Die Zusammensetzung kann auch noch im Bereich von 0 - 5 Gew.-% weitere Additive enthalten. Die Gew.-%-Angaben beziehen sich auf die genannten Bestandteile ohne das Lösungsmittel der Zusammensetzung und ergänzen sich insgesamt zu 100 Gew.-%.

Die Erfindung betrifft außerdem ein Verfahren zur Herstellung eines tribologischen Kompositmaterials.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

In einem ersten Schritt wird die Zusammensetzung auf ein Substrat aufgetragen. Dies kann auf jede übliche Weise geschehen. Es können alle gängigen Beschichtungsverfahren eingesetzt werden. Beispiele sind Schleuderbeschichten, (Elektro)Tauchbeschichten, Rakeln, Sprühen, Spritzen, Gießen, Streichen, Fluten, Messergießen, Slot-Coating, Meniskus-Coating, Curtain-Coating und Walzenauftrag.

Es können alle üblichen Materialien beschichtet werden. Beispiele für ein geeignetes Substrat sind Substrate aus Metall, Halbleiter, Glas, Keramik, einschließlich poröser Keramiken, Glaskeramik, Kunststoff, Holz, Papier, Baustoffe oder anorganisch-organische Kompositmaterialien. Die Substrate können vorbehandelt sein, z.B. durch eine Coronabehandlung oder mit einer Vorbeschichtung, wie einer Lackierung (Lackoberflächen), einer Emaillierung, einem Anstrich oder einer metallisierten Oberfläche, oder durch Imprägnierung.

Als Beispiele für Metallsubstrate seien z.B. Kupfer, Aluminium, Messing, Eisen, Stahl und Zink genannt. Beispiele für Halbleiter sind Silizium, z.B. in Form von Wafern, und Indium-Zinn-Oxid-Schichten (ITO-Schichten) auf Glas. Als Glas können alle herkömmlichen Glasarten verwendet werden, z.B. Kieselglas, Borosilicatglas oder Kalknatronsilicatglas. Beispiele für Kunststoffsubstrate sind Polycarbonat, Polymethylmethacrylat, Polyacrylate, Polyethylenterephthalat, Polyamid, Polyetherketon (PEK), Polyetheretherketon (PEEK) oder Polyoxymethylen. Insbesondere für optische oder optoelektronische Anwendungen eignen sich transparente Substrate, z.B. aus Glas oder Kunststoff. Beispiele für Baustoffe sind Steine, Beton, Kacheln, Gipsplatten oder Ziegel.

Danach erfolgt eine Härtung. Da die Härtung naturgemäß im Wesentlichen von den eingesetzten Bindemittelsystemen abhängen, können keine speziellen Aussagen getroffen werden. Dem Fachmann ist bekannt, welche Härtungsbedingungen für die jeweiligen bekannten Bindemittelsysteme zweckmäßig sind. Wie gesagt, kann es sich um oxidativ härtende, kalthärtende oder um thermisch oder durch Bestrahlung härtbare Systeme handeln.

In Abhängigkeit von der Partikelgröße der zugesetzten Teilchen können die Eigenschaften in verschiedenen Bereichen modifiziert werden. Werden Partikel im µm-Bereich benutzt und ist die Brechzahl der Matrix nicht an die Partikel angepasst, so werden opake bis transluzente Schichten erzielt. Durch die Wahl der Ausgangskomponenten, insbesondere der Matrixmaterials und des Anteils von aromatischen (hochbrechenden) Komponenten und aliphatischen Komponenten, kann jedoch der Brechwert an verschiedene eingesetzte Pulver mit mittleren Teilchendurchmessern im µm-Bereich angepasst werden. Hier spielt auch der Brechwert der Pulver eine Rolle, bei der man eine relativ große Auswahl hat, angefangen mit SiO₂ mit sehr niedrigen Brechzahlen über Aluminiumoxid, Siliziumcarbid und Zirkondioxid mit höheren Brechzahlen.

In einer bevorzugten Weiterbildung des Verfahrens wird die Zusammensetzung derart hergestellt, zunächst eine Mischung aus mindestens einem plättchenförmigen Festkörperschmierstoff und einer oberflächenaktiven Verbindung in einem für vernetzbare Polymere geeigneten Lösungsmittel hergestellt wird. Dabei wird der mindestens eine Festkörperschmierstoff mit der oberflächenaktiven Verbindung oberflächenmodifiziert.

Erst in einem nächsten Schritt werden das härtbare Bindemittelsystem und der mindestens eine Typ anorganischer plättchenförmiger Pigmentteilchen zugegeben. In diesem Schritt werden gegebenenfalls auch die anorganischen Teilchen zugegeben. Das härtbare Bindemittelsystem kann auch in einem oder mehreren Lösungsmitteln gelöst sein. Auch die Pigmentteilchen können als Suspension zugegeben werden.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.
- Fig. 1: Vergleich verschiedener Pigmentteilchen in ihrem Einfluß auf den Reibungskoeffizient µ bei einer Pigmentkonzentration von 5 Gew.-% (BN 110: 30 Gew.-%, SiC: 5 Gew.-%); A 65: Vergleichsprobe ohne Pigment;
- Fig. 2: Vergleich ausgewählter Pigmentteilchen in ihrem Einfluß auf den Reibungskoeffizient µ bei einer Pigmentkonzentration von 5 Gew.-% (BN 110: 30 Gew.-%, SiC: 5 Gew.-%, AM: Autumn Mystery, LS: Lapis Sunlight); A 65: Vergleichsprobe ohne Pigment;
- Fig. 3: Variation von SiC UF-10 bei 5% Lapis S und 10% FL;
- Fig. 4: Variation von Lapis S im SiC-System;
- Fig. 5: Systematischer Aufbau SiC-System; A193 = erfindungsgemäße Zusammensetzung; A113, A119, A274 und A65 = Vergleichsbeispiele;
- Fig. 6: Variation von Si₃N₄ nano70 Gehalt;
- Fig. 7: Variation von Si₃N₄ E05;
- Fig. 8: Variation von Si₃N₄ E03;
- Fig. 9: Variation Si₃N₄ M11-A (breite Verteilung) Gehalt;
- Fig. 10: Variation Si₃N₄ B7 (3,0 µm) Gehalt;

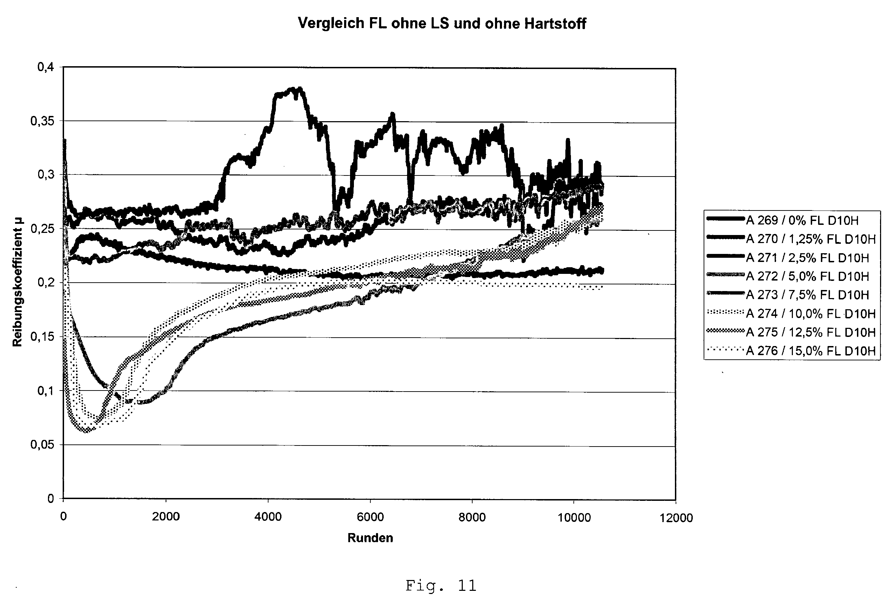

- Fig. 11: Variation FL D10H-Gehalt im System ohne Hartstoff;
- Fig. 12: Variation FL D10H-Gehalt im Si₃N₄ B7 (3,0 µm) System;
- Fig. 13: Systematischer Aufbau Si₃N₄ M11-A - System ohne BN;

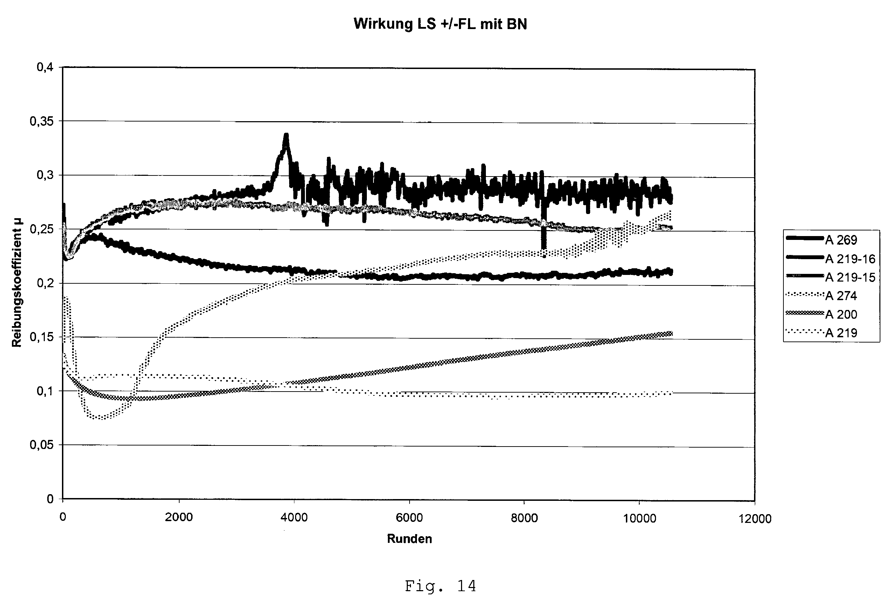

- Fig. 14: Systematischer Aufbau Si₃N₄ M11-A - System mit BN;
- Fig. 15: REM-Aufnahme Hebofil BN 110;
- Fig. 16: REM-Aufnahme SiC;
- Fig. 17: REM Aufnahme der Hartstoffteilchen Si₃N₄ E05;
- Fig. 18: REM Aufnahme der Hartstoffteilchen Si₃N₄ E03;
- Fig. 19: REM-Aufnahme der Harstoffteilchen Si₃N₄ M11-A;
- Fig. 20: REM-Aufnahme der Pigmentteilchen Autumn Mystery mit FeOₓ Oberfläche;
- Fig. 21: REM-Aufnahme der Pigmentteilchen Lapis Sunlight mit TiO₂ Oberfläche;
- Fig. 22: REM-Aufnahme A219 Draufsicht;
- Fig. 23: REM-Aufnahme A219 Querschnitt;
- Fig. 24: Neutraler Salzsprüh-Test nach 312 h;

Es sind zahlreiche Abwandlungen und Weiterbildungen der beschriebenen Ausführungsbeispiele verwirklichbar.

### Ausführungsbeispiele:

### Generelle Vorgehensweise zur Synthese:

In einem Dispermaten werden 10 - 40% des verwendeten Lösungsmittels, Dispergier-Glasperlen, der Festschmierstoff und die oberflächenaktive Verbindung mit mindestens einer hydrophilen und mindestens einer hydrophoben Gruppe bei 50 °C und 2000 U/min dispergiert. Nach 15 Minuten werden die Matrixkomponenten sowie ggfs. die Hartstoffteilchen hinzu gegeben und für weitere 90 min bei 50°C und 2000 U/min dispergiert. Die Glasperlen werden durch Filtration aus dem Rohprodukt entfernt. Die anschließende Dispergierung der Pigmentteilchen in der Gesamtmischung erfolgt mittels einer Dissolverscheibe über 30 min bei 25 °C und 1000 U/min.

### Applikation:

Die erhaltene Reaktivmischung kann durch technisch übliche Applikationen, wie z.B. Tauchapplikation oder Sprühapplikation, aufgebracht werden. Die Aushärtung findet bei 150°C - 250°C für 1h - 2h statt.

### Erfindungsgemäße Zusammensetzungen

Beispiel 1: Basissystem ohne Hartstoff (A200)
   5,94 g Bornitrid BN 110 (Henze) werden mit 35 ml N-Methyl-2-pyrrolidon (NMP) und 1,98 g Fluorolink D10H (Solvay) in einem Dispermaten bei 50°C und 2000 U / min über 15 min gemischt. Anschließend werden 3,37 g Pyromellitsäuredianhydrid (PMDA) und 7,51 g Bis[4-(3-aminophenoxy)phenyl]sulfon (BAPPS) hinzu gegeben und für weitere 90 min bei 50°C und 2000 U/min dispergiert. Nach Abtrennung der Glasperlen werden 0,99 g Lapis Sunlight T20-04-WNT (Merck) zugegeben und die erhaltene Gesamtmischung mittels einer Dissolverscheibe über 30 min bei 25 °C und 1000 U/min vermischt. Man erhält eine homogene, flüssige Reaktivmischung von hellbräunlicher Färbung.
Beispiel 2: analog Beispiel 1 mit 1,25 % SiC (A201)
   6,08 g Bornitrid BN 110 (Henze) werden mit 35 ml NMP und 2,03 g Fluorolink D10H (Solvay) in einem Dispermaten bei 50°C und 2000 U / min über 15 min gemischt. Anschließend werden 3,37 g PMDA, 7,51 g BAPPS und 0,25 g SiC UF10 (HC Starck) hinzu gegeben und für weitere 90 min bei 50°C und 2000 U/min dispergiert. Nach Abtrennung der Glasperlen werden 1,01 g Lapis Sunlight T20-04-WNT (Merck) zugegeben und die erhaltene Gesamtmischung mittels einer Dissolverscheibe über 30 min bei 25 °C und 1000 U/min vermischt. Man erhält eine homogene, flüssige Reaktivmischung von hellbräunlicher Färbung.
Beispiel 3: analog Beispiel 1 mit 2,5 % SiC (A202)
   6,22 g Bornitrid BN 110 (Henze) werden mit 35 ml NMP und 2,07 g Fluorolink D10H (Solvay) in einem Dispermaten bei 50°C und 2000 U / min über 15 min gemischt. Anschließend werden 3,37 g PMDA, 7,51 g BAPPS und 0,52 g SiC UF10 (HC Starck) hinzu gegeben und für weitere 90 min bei 50°C und 2000 U/min dispergiert. Nach Abtrennung der Glasperlen werden 1,04 g Lapis Sunlight T20-04-WNT (Merck) zugegeben und die erhaltene Gesamtmischung mittels einer Dissolverscheibe über 30 min bei 25 °C und 1000 U/min vermischt. Man erhält eine homogene, flüssige Reaktivmischung von hellbräunlicher Färbung.
Beispiel 4: analog Beispiel 1 mit 5 % SiC (A169/A193)
   6,53 g Bornitrid BN 110 (Henze) werden mit 35 ml NMP und 2,18 g Fluorolink D10H (Solvay) in einem Dispermaten bei 50°C und 2000 U / min über 15 min gemischt. Anschließend werden 3,37 g PMDA, 7,51 g BAPPS und 1,09 g SiC UF10 (HC Starck) hinzu gegeben und für weitere 90 min bei 50°C und 2000 U/min dispergiert. Nach Abtrennung der Glasperlen werden 1,09 g Lapis Sunlight T20-04-WNT (Merck) zugegeben und die erhaltene Gesamtmischung mittels einer Dissolverscheibe über 30 min bei 25 °C und 1000 U/min vermischt. Man erhält eine homogene, flüssige Reaktivmischung von hellbräunlicher Färbung.
Beispiel 5: analog Beispiel 1 mit 10 % SiC (A204)
   7,26 g Bornitrid BN 110 (Henze) werden mit 35 ml NMP und 2,42 g Fluorolink D10H (Solvay) in einem Dispermaten bei 50°C und 2000 U / min über 15 min gemischt. Anschließend werden 3,37 g PMDA, 7,51 g BAPPS und 2,42 g SiC UF10 (HC Starck) hinzu gegeben und für weitere 90 min bei 50°C und 2000 U/min dispergiert. Nach Abtrennung der Glasperlen werden 1,21 g Lapis Sunlight T20-04-WNT (Merck) zugegeben und die erhaltene Gesamtmischung mittels einer Dissolverscheibe über 30 min bei 25 °C und 1000 U/min vermischt. Man erhält eine homogene, flüssige Reaktivmischung von hellbräunlicher Färbung.
Beispiel 6: analog Beispiel 1 mit 15 % SiC (A205)
   8,16 g Bornitrid BN 110 (Henze) werden mit 35 ml NMP und 2,72 g Fluorolink D10H (Solvay) in einem Dispermaten bei 50°C und 2000 U / min über 15 min gemischt. Anschließend werden 3,37 g PMDA, 7,51 g BAPPS und 4,08 g SiC UF10 (HC Starck) hinzu gegeben und für weitere 90 min bei 50°C und 2000 U/min dispergiert. Nach Abtrennung der Glasperlen werden 1,36 g Lapis Sunlight T20-04-WNT (Merck) zugegeben und die erhaltene Gesamtmischung mittels einer Dissolverscheibe über 30 min bei 25 °C und 1000 U/min vermischt. Man erhält eine homogene, flüssige Reaktivmischung von hellbräunlicher Färbung.
Beispiel 7: analog Beispiel 1 mit 20 % SiC (A206)
   9,33 g Bornitrid BN 110 (Henze) werden mit 35 ml NMP und 3,11 g Fluorolink D10H (Solvay) in einem Dispermaten bei 50°C und 2000 U / min über 15 min gemischt. Anschließend werden 3,37 g PMDA, 7,51 g BAPPS und 6,22 g SiC UF10 (HC Starck) hinzu gegeben und für weitere 90 min bei 50°C und 2000 U/min dispergiert. Nach Abtrennung der Glasperlen werden 1,55 g Lapis Sunlight T20-04-WNT (Merck) zugegeben und die erhaltene Gesamtmischung mittels einer Dissolverscheibe über 30 min bei 25 °C und 1000 U/min vermischt. Man erhält eine homogene, flüssige Reaktivmischung von hellbräunlicher Färbung.
Beispiel 8: analog Beispiel 2 mit 1,25 % Si₃N₄ E05 (A233)
   6,08 g Bornitrid BN 110 (Henze), 35 ml NMP, 2,03 g Fluorolink D10H (Solvay), 3,37 g PMDA, 7,51 g BAPPS, 0,25 g Si₃N₄ E05 (UBE), 1,01 g Lapis Sunlight T20-04-WNT (Merck)
Beispiel 9: analog Beispiel 3 mit 2,5 % Si₃N₄ E05 (A234)
   6,22 g Bornitrid BN 110 (Henze), 35 ml NMP, 2,07 g Fluorolink D10H (Solvay), 3,37 g PMDA, 7,51 g BAPPS, 0,52 g Si₃N₄ E05 (UBE), 1,04 g Lapis Sunlight T20-04-WNT (Merck)
Beispiel 10: analog Beispiel 4 mit 5 % Si₃N₄ E05 (A235)
   6,53 g Bornitrid BN 110 (Henze), 35 ml NMP, 2,18 g Fluorolink D10H (Solvay), 3,37 g PMDA, 7,51 g BAPPS, 1,09 g Si₃N₄ E05 (UBE), 1,09 g Lapis Sunlight T20-04-WNT (Merck
Beispiel 11: analog Beispiel 5 mit 10 % Si₃N₄ E05 (A236)
   7,26 g Bornitrid BN 110 (Henze), 35 ml NMP, 2,42 g Fluorolink D10H (Solvay), 3,37 g PMDA, 7,51 g BAPPS, 2,42 g Si₃N₄ E05 (UBE), 1,21 g Lapis Sunlight T20-04-WNT (Merck)
Beispiel 12: analog Beispiel 6 mit 15 % Si₃N₄ E05 (A237)
   8,16 g Bornitrid BN 110 (Henze), 35 ml NMP, 2,72 g Fluorolink D10H (Solvay), 3,37 g PMDA, 7,51 g BAPPS, 4,08 g Si₃N₄ E05 (UBE), 1,36 g Lapis Sunlight T20-04-WNT (Merck)
Beispiel 13: analog Beispiel 2 mit 1,25 % Si₃N₄ E03 (A238)
   6,08 g Bornitrid BN 110 (Henze), 35 ml NMP 2,03 g Fluorolink D10H (Solvay), 3,37 g PMDA, 7,51 g BAPPS, 0,25 g Si₃N₄ E03 (UBE), 1,01 g Lapis Sunlight T20-04-WNT (Merck)
Beispiel 14: analog Beispiel 3 mit 2,5 % Si₃N₄ E03 (A239)
   6,22 g Bornitrid BN 110 (Henze), 35 ml NMP, 2,07 g Fluorolink D10H (Solvay), 3,37 g PMDA, 7,51 g BAPPS, 0,52 g Si₃N₄ E03 (UBE), 1,04 g Lapis Sunlight T20-04-WNT (Merck)
Beispiel 15: analog Beispiel 4 mit 5 % Si₃N₄ E03 (A240)
   6,53 g Bornitrid BN 110 (Henze), 35 ml NMP, 2,18 g Fluorolink D10H (Solvay), 3,37 g PMDA, 7,51 g BAPPS, 1,09 g Si₃N₄ E03 (UBE), 1,09 g Lapis Sunlight T20-04-WNT (Merck)
Beispiel 16: analog Beispiel 5 mit 10 % Si₃N₄ E03 (A241)
   7,26 g Bornitrid BN 110 (Henze), 35 ml NMP, 2,42 g Fluorolink D10H (Solvay), 3,37 g PMDA, 7,51 g BAPPS, 2,42 g Si₃N₄ E03 (UBE), 1,21 g Lapis Sunlight T20-04-WNT (Merck)
Beispiel 17: analog Beispiel 6 mit 15 % Si₃N₄ E03 (A242)
   8,16 g Bornitrid BN 110 (Henze), 35 ml NMP, 2,72 g Fluorolink D10H (Solvay), 3,37 g PMDA, 7,51 g BAPPS, 4,08 g Si₃N₄ E03 (UBE), 1,36 g Lapis Sunlight T20-04-WNT (Merck)
Beispiel 18: analog Beispiel 2 mit 1,25 % Si₃N₄ M11-A (A218)
   6,08 g Bornitrid BN 110 (Henze), 35 ml NMP, 2,03 g Fluorolink D10H (Solvay), 3,37 g PMDA, 7,51 g BAPPS, 0,25 g Si₃N₄ M11-A (HC Starck), 1,01 g Lapis Sunlight T20-04-WNT (Merck)
Beispiel 19: analog Beispiel 3 mit 2,5 % Si₃N₄ M11-A (A219)
   6,22 g Bornitrid BN 110 (Henze), 35 ml NMP, 2,07 g Fluorolink D10H (Solvay), 3,37 g PMDA, 7,51 g BAPPS, 0,52 g Si₃N₄ M11-A (HC Starck), 1,04 g Lapis Sunlight T20-04-WNT (Merck)
Beispiel 20: analog Beispiel 4 mit 5 % Si₃N₄ M11-A (A220)
   6,53 g Bornitrid BN 110 (Henze), 35 ml NMP, 2,18 g Fluorolink D10H (Solvay), 3,37 g PMDA, 7,51 g BAPPS, 1,09 g Si₃N₄ M11-A (HC Starck), 1,09 g Lapis Sunlight T20-04-WNT (Merck)
Beispiel 21: analog Beispiel 5 mit 10 % Si₃N₄ M11-A (A221)
   7,26 g Bornitrid BN 110 (Henze), 35 ml NMP, 2,42 g Fluorolink D10H (Solvay), 3,37 g PMDA, 7,51 g BAPPS, 2,42 g Si₃N₄ M11-A (HC Starck), 1,21 g Lapis Sunlight T20-04-WNT (Merck)
Beispiel 22: analog Beispiel 6 mit 15 % Si₃N₄ M11-A (A222)
   8,16 g Bornitrid BN 110 (Henze), 35 ml NMP, 2,72 g Fluorolink D10H (Solvay), 3,37 g PMDA, 7,51 g BAPPS, 4,08 g Si₃N₄ M11-A (HC Starck), 1,36 g Lapis Sunlight T20-04-WNT (Merck)
Beispiel 23: analog Beispiel 2 mit 1,25 % Si₃N₄ B7 (A223)
   6,08 g Bornitrid BN 110 (Henze 35 ml NMP, 2,03 g Fluorolink D10H (Solvay), 3,37 g PMDA, 7,51 g BAPPS, 0,25 g Si₃N₄ B7 (HC Starck), 1,01 g Lapis Sunlight T20-04-WNT (Merck)
Beispiel 24: analog Beispiel 3 mit 2,5 % Si₃N₄ B7 (A224)
   6,22 g Bornitrid BN 110 (Henze), 35 ml NMP, 2,07 g Fluorolink D10H (Solvay), 3,37 g PMDA, 7,51 g BAPPS, 0,52 g Si₃N₄ B7 (HC Starck), 1,04 g Lapis Sunlight T20-04-WNT (Merck)
Beispiel 25: analog Beispiel 4 mit 5 % Si₃N₄ B7 (A225)
   6,53 g Bornitrid BN 110 (Henze), 35 ml NMP, 2,18 g Fluorolink D10H (Solvay), 3,37 g PMDA, 7,51 g BAPPS, 1,09 g Si₃N₄ B7 (HC Starck), 1,09 g Lapis Sunlight T20-04-WNT (Merck)
Beispiel 26: analog Beispiel 5 mit 10 % Si₃N₄ B7 (A226)
   7,26 g Bornitrid BN 110 (Henze), 35 ml NMP, 2,42 g Fluorolink D10H (Solvay), 3,37 g PMDA, 7,51 g BAPPS, 2,42 g Si₃N₄ B7 (HC Starck), 1,21 g Lapis Sunlight T20-04-WNT (Merck)
Beispiel 27: analog Beispiel 6 mit 15 % Si₃N₄ B7 (A227)
   8,16 g Bornitrid BN 110 (Henze), 35 ml NMP, 2,72 g Fluorolink D10H (Solvay), 3,37 g PMDA, 7,51 g BAPPS, 4,08 g Si₃N₄ B7 (HC Starck), 1,36 g Lapis Sunlight T20-04-WNT (Merck)
Beispiel 28: analog Beispiel 2 mit 1,25 % Si₃N₄ nano70 (A228)
   6,08 g Bornitrid BN 110 (Henze), 35 ml NMP, 2,03 g Fluorolink D10H (Solvay), 3,37 g PMDA, 7,51 g BAPPS, 0,25 g Si₃N₄ nano70 (Aldrich), 1,01 g Lapis Sunlight T20-04-WNT (Merck)
Beispiel 29: analog Beispiel 3 mit 2,5 % Si₃N₄ nano70 (A229)
   6,22 g Bornitrid BN 110 (Henze), 35 ml NMP, 2,07 g Fluorolink D10H (Solvay), 3,37 g PMDA, 7,51 g BAPPS, 0,52 g Si₃N₄ nano70 (Aldrich), 1,04 g Lapis Sunlight T20-04-WNT (Merck)
Beispiel 30: analog Beispiel 4 mit 5 % Si₃N₄ nano70 (A230)
   6,53 g Bornitrid BN 110 (Henze), 35 ml NMP, 2,18 g Fluorolink D10H (Solvay), 3,37 g PMDA, 7,51 g BAPPS, 1,09 g Si₃N₄ nano70 (Aldrich), 1,09 g Lapis Sunlight T20-04-WNT (Merck)
Beispiel 31: analog Beispiel 5 mit 10 % Si₃N₄ nano70 (A231)
   7,26 g Bornitrid BN 110 (Henze), 35 ml NMP, 2,42 g Fluorolink D10H (Solvay), 3,37 g PMDA, 7,51 g BAPPS, 2,42 g Si₃N₄ nano70 (Aldrich), 1,21 g Lapis Sunlight T20-04-WNT (Merck)
Beispiel 32: analog Beispiel 6 mit 15 % Si₃N₄ nano70 (A232)
   8,16 g Bornitrid BN 110 (Henze), 35 ml NMP, 2,72 g Fluorolink D10H (Solvay), 3,37 g PMDA, 7,51 g BAPPS, 4,08 g Si₃N₄ nano70 (Aldrich), 1,36 g Lapis Sunlight T20-04-WNT (Merck)
Beispiel 33: analog Beispiel 23 mit 1,25 % FL D10H (A243)
   5,22 g Bornitrid BN 110 (Henze), 35 ml NMP, 0,22 g Fluorolink D10H (Solvay), 3,37 g PMDA, 7,51 g BAPPS, 0,22 g Si₃N₄ B7 (HC Starck), 0,87 g Lapis Sunlight T20-04-WNT (Merck)
Beispiel 34: analog Beispiel 23 mit 2,5 % FL D10H (A244)
   5,33 g Bornitrid BN 110 (Henze), 35 ml NMP, 0,44 g Fluorolink D10H (Solvay), 3,37 g PMDA, 7,51 g BAPPS, 0,22 g Si₃N₄ B7 (HC Starck), 0,89 g Lapis Sunlight T20-04-WNT (Merck)
Beispiel 35: analog Beispiel 23 mit 5 % FL D10H (A245)
   5,56 g Bornitrid BN 110 (Henze), 35 ml NMP, 0,93 g Fluorolink D10H (Solvay), 3,37 g PMDA, 7,51 g BAPPS, 0,23 g Si₃N₄ B7 (HC Starck), 0,93 g Lapis Sunlight T20-04-WNT (Merck)
Beispiel 36: analog Beispiel 23 mit 7,5 % FL D10H (A246)
   5,81 g Bornitrid BN 110 (Henze), 35 ml NMP, 1,45 g Fluorolink D10H (Solvay), 3,37 g PMDA, 7,51 g BAPPS, 0,24 g Si₃N₄ B7 (HC Starck), 0,97 g Lapis Sunlight T20-04-WNT (Merck)
Beispiel 37: analog Beispiel 23 mit 15 % FL D10H (A247)
   6,70 g Bornitrid BN 110 (Henze), 35 ml NMP, 3,35 g Fluorolink D10H (Solvay), 3,37 g PMDA, 7,51 g BAPPS, 0,28 g Si₃N₄ B7 (HC Starck), 1,12 g Lapis Sunlight T20-04-WNT (Merck)
Beispiel 38: analog Beispiel 25 mit 10 % PDMS-Diol-700 statt 10 % FL D10H (A225-PDMS-Diol-700)
   6,53 g Bornitrid BN 110 (Henze) werden mit 35 ml NMP und 2,18 g PDMS-Diol-700 (Aldrich CAS: 70131-67-8 Poly(dimethylsiloxan), Hydroxy terminiert, Mₙ -550, Kettenlänge, 7-8 Si-Einheiten
   C₁₄H₄₄O₈Si₇ Mol. Wt.: 537,09 C₁₆H₅₀O₉Si₈ Mol. Wt.: 611,25) in einem Dispermaten bei 50°C und 2000 U / min über 15 min gemischt. Anschließend werden 3,37 g PMDA, 7,51 g BAPPS und 1,09 g Si₃N₄ B7 (HC Starck) hinzu gegeben und für weitere 90 min bei 50°C und 2000 U/min dispergiert. Nach Abtrennung der Glasperlen werden 1,09 g Lapis Sunlight T20-04-WNT (Merck) zugegeben und die erhaltene Gesamtmischung mittels einer Dissolverscheibe über 30 min bei 25 °C und 1000 U/min vermischt. Man erhält eine homogene, flüssige Reaktivmischung von hellbräunlicher Färbung.
Beispiel 39: analog Beispiel 19 mit 10 % PEG-block-PPG-block-PEG statt 10 % FL D10H (A219-PEG-b-PPG-b-PEG)
   6,22 g Bornitrid BN 110 (Henze) werden mit 35 ml NMP und 2,07 g Poly(ethylenglycol)-block-poly(propylenglycol)-block-poly(ethylenglycol) (Aldrich 435406 CAS [9003-11-6] Mₙ -1,100, HO(C₂H₄O)ₘ(C₃H₆O)ₙ(C₂H₄O)ₘH) in einem Dispermaten bei 50 °C und 2000 U / min über 15 min gemischt. Anschließend werden 3,37 g PMDA, 7,51 g BAPPS und 0,52 g Si₃N₄ M11-A (HC Starck) hinzu gegeben und für weitere 90 min bei 50°C und 2000 U/min dispergiert. Nach Abtrennung der Glasperlen werden 1,04 g Lapis Sunlight T20-04-WNT (Merck) zugegeben und die erhaltene Gesamtmischung mittels einer Dissolverscheibe über 30 min bei 25 °C und 1000 U/min vermischt. Man erhält eine homogene, flüssige Reaktivmischung von hellbräunlicher Färbung.

### Vergleichszusammensetzungen ohne Schmierstoff

Vergleichsbeispiel 1: Ohne Schmierstoff, ohne Pigment, ohne Hartstoff, ohne oberflächenaktive Verbindung (A265)
   3,37 g PMDA und 7,51 g BAPPS werden mit 35 ml NMP in einem Dispermaten bei 50°C und 2000 U / min über 115 min gemischt. Nach Abtrennung der Glasperlen erhält man eine homogene, flüssige Reaktivmischung von bräunlicher Färbung.
Vergleichsbeispiel 2: Ohne Schmierstoff, ohne Pigment, ohne Hartstoff, mit oberflächenaktiver Verbindung (A119)
   3,37 g PMDA, 7,51 g BAPPS 2,07 g Fluorolink D10H (Solvay) werden mit 35 ml NMP in einem Dispermaten bei 50°C und 2000 U / min über 115 min gemischt. Nach Abtrennung der Glasperlen erhält man eine homogene, flüssige Reaktivmischung von bräunlicher Färbung.
Vergleichsbeispiel 3: Ohne Schmierstoff, mit Pigment, ohne Hartstoff, mit oberflächenaktiver Verbindung (A219-14)
   3,37 g PMDA, 7,51 g BAPPS und 2,07 g Fluorolink D10H (Solvay) werden mit 35 ml NMP in einem Dispermaten bei 50°C und 2000 U / min über 115 min gemischt. Nach Abtrennung der Glasperlen werden 1,04 g Lapis Sunlight T20-04-WNT (Merck) zugegeben und die erhaltene Gesamtmischung mittels einer Dissolverscheibe über 30 min bei 25 °C und 1000 U/min vermischt. Man erhält eine homogene, flüssige Reaktivmischung von hellbräunlicher Färbung.
Vergleichsbeispiel 4: Ohne Schmierstoff, mit Pigment, mit Hartstoff, mit oberflächenaktiver Verbindung (A219-12)
   3,37 g PMDA, 7,51 g BAPPS werden mit 35 ml NMP und 2,07 g Fluorolink D10H (Solvay) in einem Dispermaten bei 50°C und 2000 U / min über 15 min gemischt. Anschließend werden und 0,52 g Si₃N₄ M11-A (HC Starck) hinzu gegeben und für weitere 90 min bei 50°C und 2000 U/min dispergiert. Nach Abtrennung der Glasperlen werden 1,04 g Lapis Sunlight T20-04-WNT (Merck) zugegeben und die erhaltene Gesamtmischung mittels einer Dissolverscheibe über 30 min bei 25 °C und 1000 U/min vermischt. Man erhält eine homogene, flüssige Reaktivmischung von hellbräunlicher Färbung.
   Vergleichzusammensetzungen mit Schmierstoff
Vergleichsbeispiel 5: Mit Schmierstoff, ohne Pigment, ohne Hartstoff, ohne oberflächenaktive Verbindung (A269)
   6,22 g Bornitrid BN 110 (Henze) werden mit 35 ml NMP in einem Dispermaten bei 50°C und 2000 U / min über 15 min gemischt. Anschließend werden 3,37 g PMDA und 7,51 g BAPPS hinzu gegeben und für weitere 90 min bei 50°C und 2000 U/min dispergiert. Nach Abtrennung der Glasperlen erhält man eine homogene, flüssige Reaktivmischung von hellbräunlicher Färbung.
Vergleichsbeispiel 6: Mit Schmierstoff, mit Pigment, ohne Hartstoff, ohne oberflächenaktive Verbindung (A219-16)
   6,22 g Bornitrid BN 110 (Henze) werden mit 35 ml NMP in einem Dispermaten bei 50°C und 2000 U / min über 15 min gemischt. Anschließend werden 3,37 g PMDA und 7,51 g BAPPS hinzu gegeben und für weitere 90 min bei 50°C und 2000 U/min dispergiert. Nach Abtrennung der Glasperlen werden 1,04 g Lapis Sunlight T20-04-WNT (Merck) zugegeben und die erhaltene Gesamtmischung mittels einer Dissolverscheibe über 30 min bei 25 °C und 1000 U/min vermischt. Man erhält eine homogene, flüssige Reaktivmischung von hellbräunlicher Färbung.
Vergleichsbeispiel 7: Mit Schmierstoff, mit Pigment, mit Hartstoff, ohne oberflächenaktive Verbindung (A219-15)
   6,22 g Bornitrid BN 110 (Henze) werden mit 35 ml NMP in einem Dispermaten bei 50°C und 2000 U / min über 15 min gemischt. Anschließend werden 3,37 g PMDA, 7,51 g BAPPS und 0,52 g Si₃N₄ M11-A (HC Starck) hinzu gegeben und für weitere 90 min bei 50°C und 2000 U/min dispergiert. Nach Abtrennung der Glasperlen werden 1,04 g Lapis Sunlight T20-04-WNT (Merck) zugegeben und die erhaltene Gesamtmischung mittels einer Dissolverscheibe über 30 min bei 25 °C und 1000 U/min vermischt. Man erhält eine homogene, flüssige Reaktivmischung von hellbräunlicher Färbung.
Vergleichsbeispiel 8: Mit Schmierstoff, ohne Pigment, ohne Hartstoff, mit oberflächenaktiver Verbindung (A274)
   6,22 g Bornitrid BN 110 (Henze) werden mit 35 ml NMP und 2,07 g Fluorolink D10H (Solvay) in einem Dispermaten bei 50°C und 2000 U / min über 15 min gemischt. Anschließend werden 3,37 g PMDA und 7,51 g BAPPS hinzu gegeben und für weitere 90 min bei 50°C und 2000 U/min dispergiert. Nach Abtrennung der Glasperlen erhält man eine homogene, flüssige Reaktivmischung von hellbräunlicher Färbung.
Vergleichsbeispiel 9: Mit Schmierstoff, ohne Pigment, mit Hartstoff, mit oberflächenaktiver Verbindung (A65)
   6,53 g Bornitrid BN 110 (Henze) werden mit 35 ml NMP und 2,18 g Fluorolink D10H (Solvay) in einem Dispermaten bei 50°C und 2000 U / min über 15 min gemischt. Anschließend werden 3,37 g PMDA, 7,51 g BAPPS und 1,09 g SiC UF10 (HC Starck) hinzu gegeben und für weitere 90 min bei 50°C und 2000 U/min dispergiert. Nach Abtrennung der Glasperlen erhält man eine homogene, flüssige Reaktivmischung von dunkelbräunlicher Färbung.

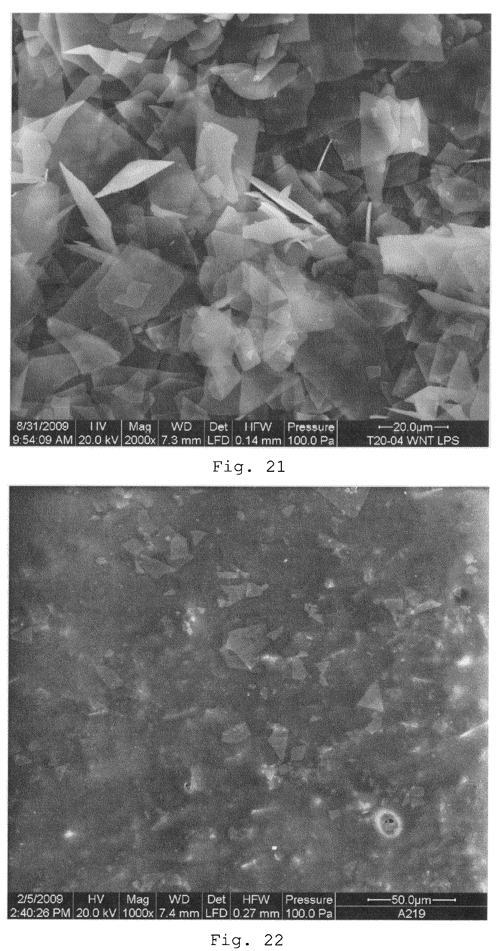

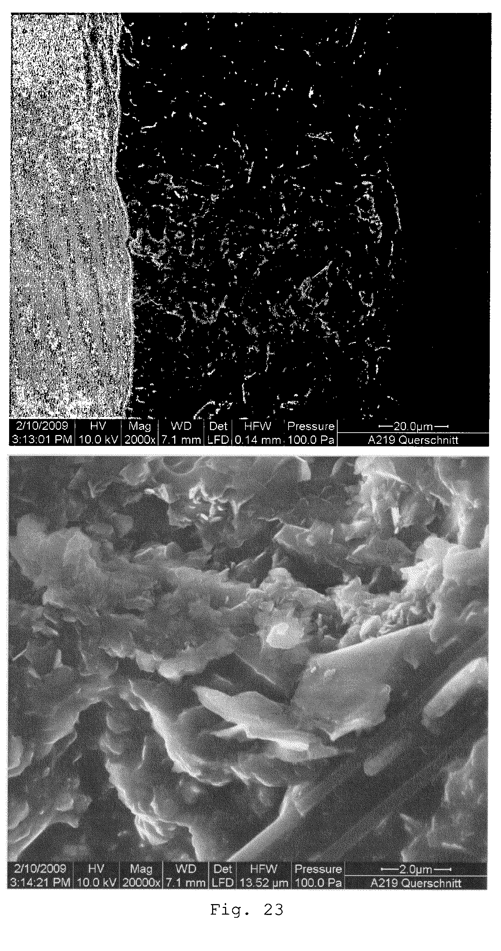

   Figur 22 und Figur 23 zeigen beispielhaft den Aufbau der Kompositmaterials A219. Tribologie

Die erzeugten Zusammensetzungen wurden auf Edelstahl-Platten aufgebacht und wie beschrieben thermisch gehärtet. Die Schichtdicke betrug 20-25 µm. Anschließend wurden die Proben im Kugel-Scheibe-Tribometer vermessen.
Die Messungen wurden unter folgendem Belastungskollektiv durchgeführt:
Kugel-Scheibe Tribometer (DIN 50324), Messung unter Luft, 100Cr6 Kugel mit 4mm Durchmesser, Kreisradius: 16 mm, Auflagekraft: 2 N, Bahngeschwindigkeit: 10 cm/s, Belastungsdistanz: 1 km.

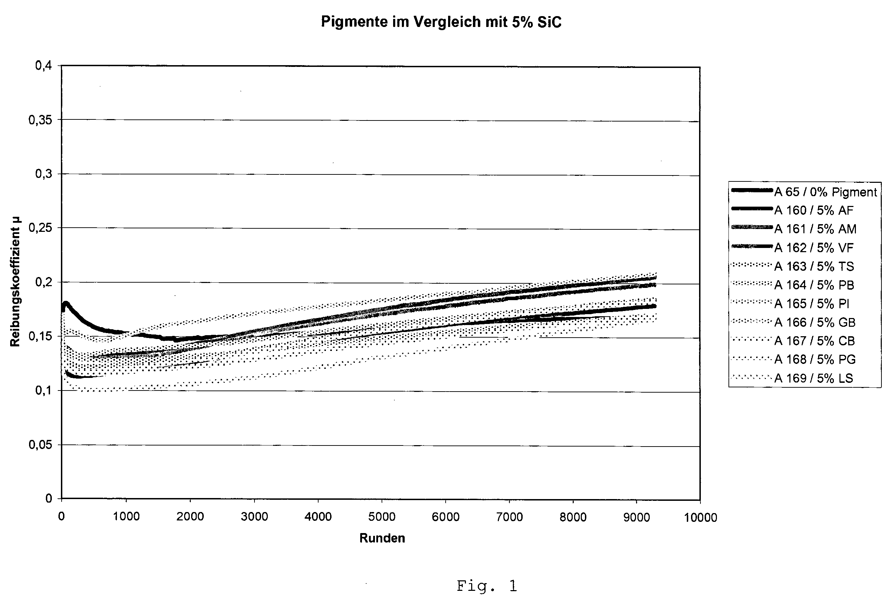

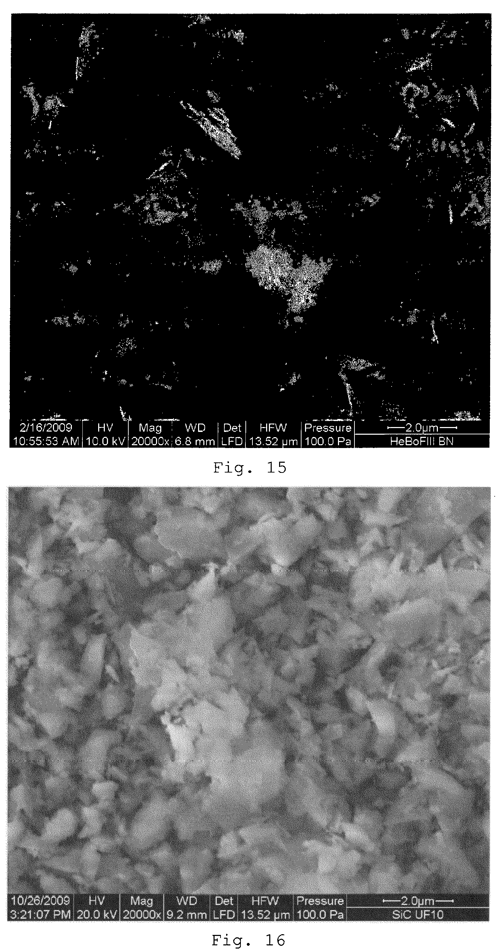

Figur 1 zeigt den Einfluss unterschiedlicher Pigmentteilchen (5 Gew.-%) auf den Gleitkoeffizienten im System mit 5 Gew.-% SiC-Hartstoffteilchen und 30 Gew.-% BN 110 Teilchen. Figur 16 und Figur 15 zeigen repräsentative REM-Aufnahmen der verwendeten SiC- bzw. BN 110 Teilchen.

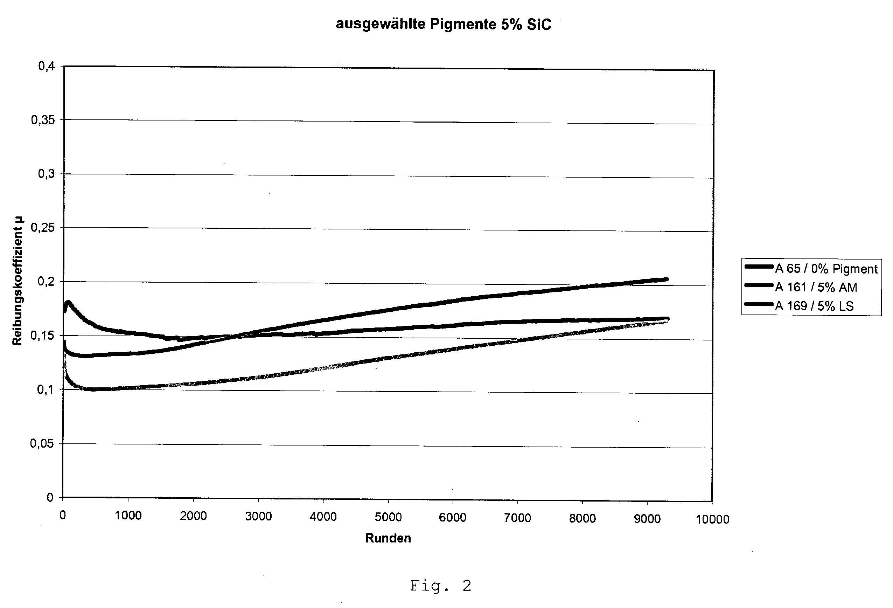

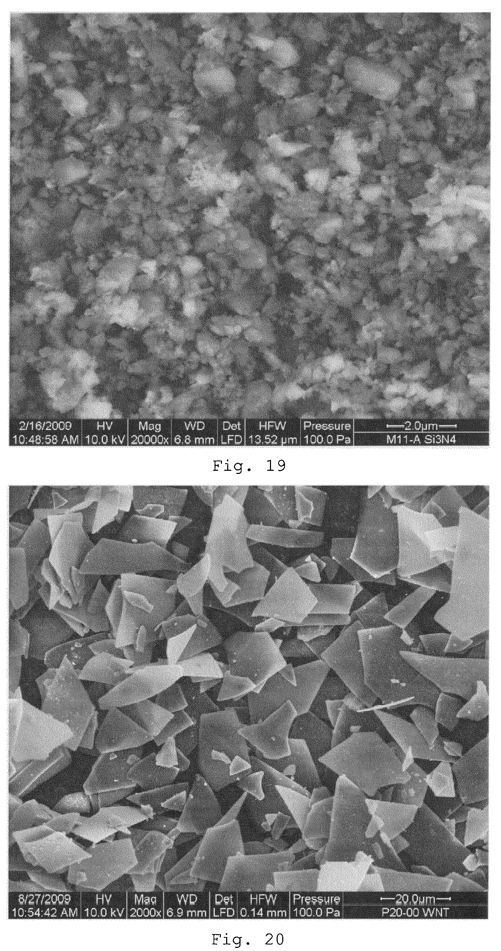

Dabei ist bemerkenswert, dass offensichtlich relativ viele unterschiedliche Pigmenttypen zu einer Reduktion des Reibungskoeffizienten in der Anfangsphase der Messung über 3000-4000 Runden gegenüber der Vergleichszusammensetzung ohne ein entsprechendes Pigment beitragen. Da das Aspektverhältnis der Pigmentteilchen untereinander relativ ähnlich ist, spielt wohl die Oberflächenchemie eine maßgebliche Rolle hinsichtlich des Ausmaßes der Reibungsreduktion. Um den Effekt nochmal deutlicher herauszuarbeiten, zeigt Figur 2 die Komposite mit Lapis Sunlight sowie Autumn Mystery als Pigmenten im Vergleich zum Komposit ohne Pigment. REM-Aufnahmen der beiden Pigmente sind in Figur 20 und Figur 21 gezeigt.

Autumn Mystery reduziert den Reibungskoeffizienten über einen Gleitweg von 2000 Runden, Lapis Sunlight zeigt den positiven Effekt sogar über 9000 Runden.

Zusammenfassend ist aufgrund besonderer Bedeutung festzuhalten, dass die Zugabe eines tribologisch zunächst inaktiven plättchenförmigen Füllstoffes in Form von Pigmentteilchen zu einem Gleitlacksystem bestehend aus einer Polymermatrix, einem Festkörperschmierstoff und einem Hartstoff zu einer weiteren Reduktion der Reibung führt. Diese Entdeckung stellt den Kernpunkt der obengenannten Erfindung dar. Der gefundene Effekt kann dabei nur über eine neue, bislang im Stand der Technik nicht beschriebene, Morphologie im gebildeten Kompositmaterial erklärt werden. Die nachfolgend beschriebenen Zusammensetzungen dienen der Eingrenzung der relevanten Zusammensetzungen.

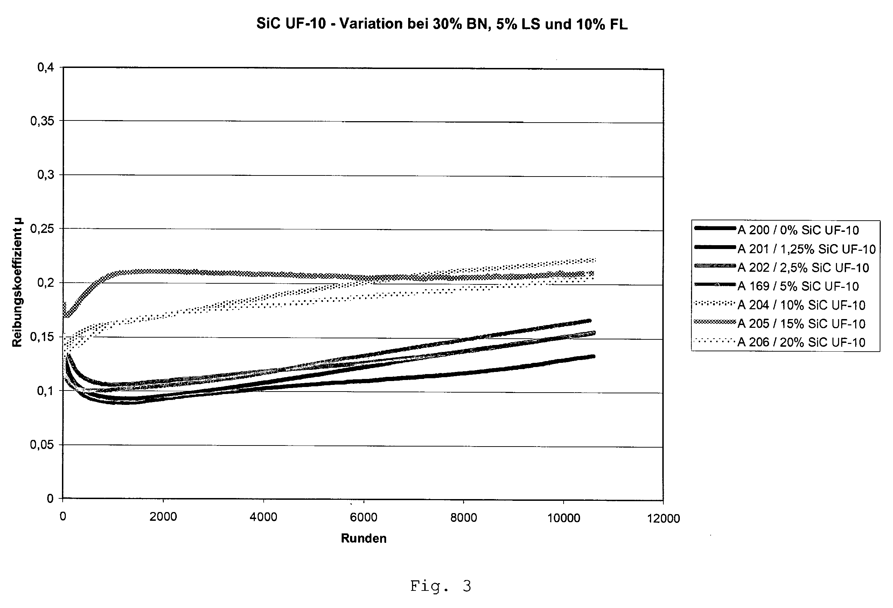

Es ist zu erwarten, dass ein Hartstoff sehr hoher Härte im tribologischen Experiment ab einer bestimmten Konzentration zu einer Zerstörung der vergleichsweise weicheren Pigmentteilchen führen kann. Hierzu wurde im System mit SiC als Hartstoff und dem Pigmentteilchen Lapis Sunlight mit der besten Reibungsreduktion die Konzentration an SiC schrittweise erhöht. Die Zusammensetzungen zeigt Tabelle 1. Die Ergebnisse der Tribometer-Messungen sind in Figur 3 gezeigt. Figur 16 zeigt eine repräsentative REM-Aufnahme des SiC. Die Morphologie der Partikel ist als unförmig-eckig zu bezeichnen. Die Partikelgrößenverteilung ist breit und reicht von Teilchen mit ca. 50 nm bis zu ca. 2 µm.

Demnach ergibt die Zugabe von SiC als Hartstoff ab ca. 10 Gew.-% einen negativen Einfluss auf den Gleitreibungskoeffizienten.

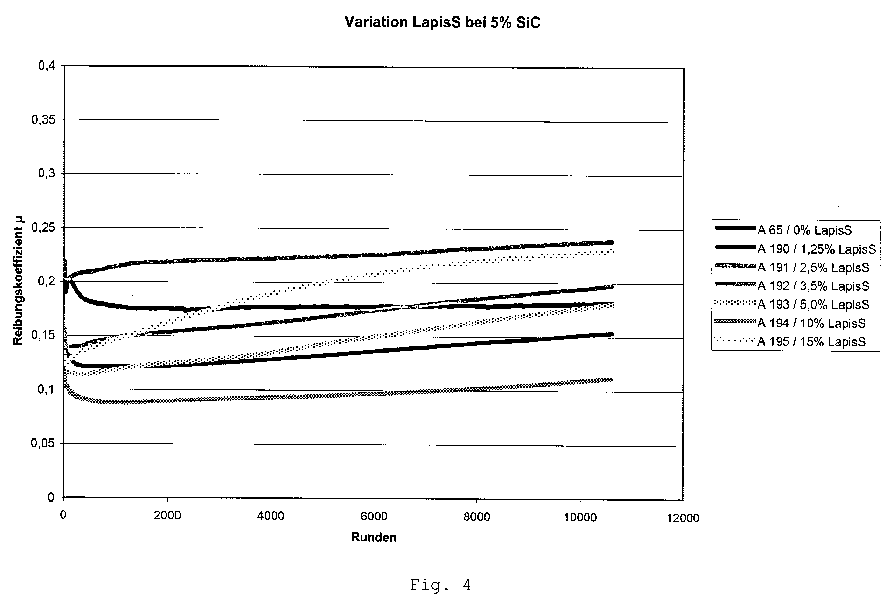

Weiterhin war von Interesse, welchen Einfluss die Konzentration an Lapis Sunlight bei konstanter SiC-Harstoffkonzentration hat. Tabelle 2 und Figur 4 zeigen die Zusammensetzungen der Komposite sowie die entsprechenden Ergebnisse der Tribometer-Messungen.

Die Messergebnisse zeigen, dass erst ab Pigment-Konzentrationen oberhalb von ca. 10 Gew.-% keine günstige Wirkung mehr auftritt.

Desweiteren war von Interesse die Systemzusammensetzung bezüglich der Einzelkomponenten zusätzlich systematisch aufzubauen, um entsprechende Vergleichsbeispiele zur Verfügung zu haben. Dieser systematische Aufbau im Sinne einer schrittweise Kombination von Komponenten wurde zunächst am System enthaltend SiC als Hartstoff durchgeführt. Tabelle 3 zeigt die interessierenden Zusammensetzungen. Die erfindungsgemäße Zusammensetzung ist A193. Sie ist die Reproduktion von A169 und identisch mit dieser in ihrer Zusammensetzung. Alle anderen Zusammensetzungen sind Vergleichsbeispiele.

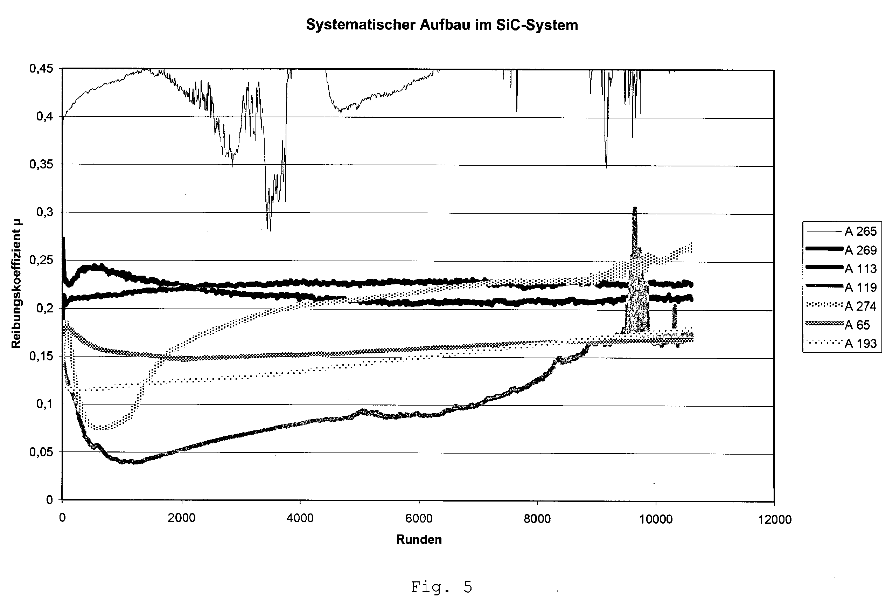

Die zugehörigen tribologischen Messungen sind in Figur 5 gezeigt.

Die reine Matrix mit 35 Gew.-% BN 110 (A113) zeigt mit µ = 0,22 einen für einen Gleitlack vergleichsweise hohen Gleitkoeffizienten allerdings mit guter Konstanz über die Distanz von 10000 Runden. Die Zugabe von FL D10H in die reine Matrix ohne BN 110 (A119) führt zu sehr niedrigen Anfangsreibwerten bis unter µ = 0,05, welche phänomenologisch eher für eine hydrodynamische Schmierung sprechen. Dies deutet an, dass FL D10H eventuell nicht vollständig in die Polyimidmatrix eingebunden wird. Die Steigung des weiteren Kurvenverlaufes deutet eine höhere Verschleißrate in diesem System an. Kurz vor Erreichen der 10000 Runden tritt Schichtversagen ein, wie an den starken Meßwertschwankungen zu erkennen ist. Werden BN 110 und FL D10H kombiniert (A274), so erhält man ebenfalls niedrige Anfangsreibwerte, jedoch verschleißt die Schicht noch schneller, als bei den Additiven im Einzelfall. Dies deutet an, dass die Schicht durch die beiden Additve in Summe insgesamt sehr weich geworden ist. Die Zugabe von zusätzlichen SiC-Hartstoffpartikeln (A 65) zeigt, dass der Gleitkoeffizient über die gesamte Messdistanz bei µ-Werten zwischen 0,15 und 0,18 vergleichmäßigt werden kann. Dies ist der klassische Fall der Wirkung eines Hartstoffes auf das Gleitverhalten. Durch Einstellung der erfindungsgemäßen Zusammensetzung mit zusätzlichen plättchenförmigen Pigmentteilchen (A193) wird über die Vergleichmäßigung hinaus auch eine weitere Absenkung des Gleitkoeffizienten insbesondere in der Anfangsphase der Belastung erreicht.

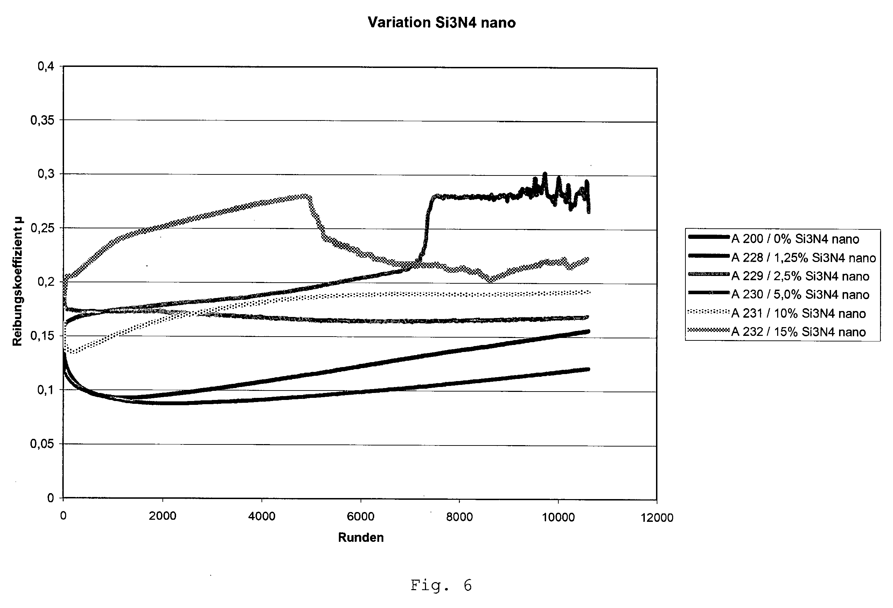

Insgesamt deutet der Kurvenverlauf für A193 jedoch an, dass noch ein merklicher Verschleiß auftritt. Ursächlich können hierfür die SiC-Hartstoffteilchen in Betracht gezogen werden, die eine abrasive Wirkung auf das Gesamtsystem ausüben können, wenn sie durch den Gegenkörper aus der Schichtoberfläche ausgetragen werden. Durch Absenkung der Härte der Hartstoffteilchen kann das Verschleißproblem minimiert werden. Diesbzüglich bietet sich Siliziumnitrid (Universalhärte HU: ca. 1500 MPa) als Ersatz für Siliziumcarbid (Universalhärte HU: ca. 2500 MPa) an. Die Tabellen (Tabelle 4, Tabelle 5, Tabelle 6, Tabelle 7, Tabelle 8)und Figuren (Figur 6, Figur 7, Figur 8, Figur 9, Figur 10) zeigen in diesem Zusammenhang die Abhängigkeit des Gleitverhaltens von der Hartstoff-Konzentration für verschiedene Typen Siliziumnitrid mit unterschiedlicher Teilchengrößenverteilung und Morphologie in Kombination mit jeweils fixen Konzentrationen an BN 110, Lapis S und FL D10H. In den meisten Fällen zeigen diese Systeme einen gleichmäßigen Verlauf des Gleitkoeffizienten unter 0,13 mit nur geringem Anstieg über die Belastungsstrecke. In einigen Fällen verläuft der Gleitkoeffizient über die gesamte Meßdauer sogar unter µ = 0,1.

Die Tabelle 4 und Figur 6 zeigen den Einfluss des Hartstoffes Si₃N₄ nano70 mit nanoskaligen Teilchen. Die Teilchengrößenverteilung liegt zwischen 10 nm und 200 nm. Morphologisch gesehen ist die Teilchenform als unförmig bis kugelförmig zu beschreiben.

Die nanoskaligen Si₃N₄-Partikel erscheinen nur bis ca. 5 Gew.-% sinnvoll einsetzbar. Bei höheren Konzentrationen ist Schichtversagen zu beobachten.

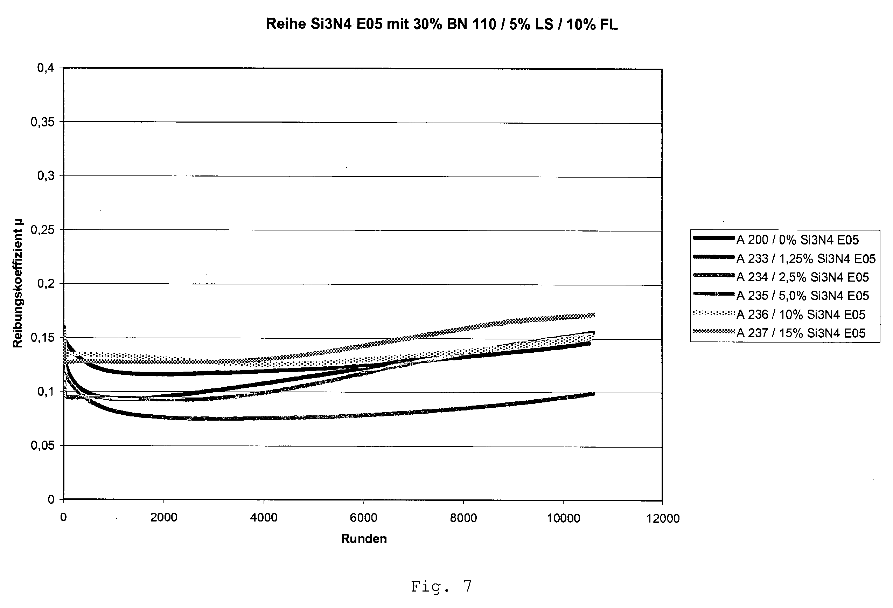

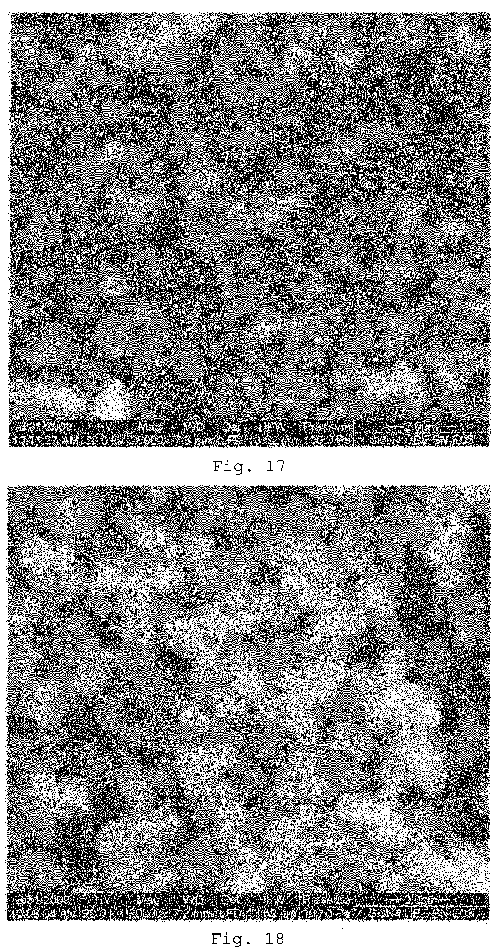

Die Tabelle 5 und Figur 7 zeigen den Einfluss des Hartstoffes Si₃N₄ E05 mit gröberen nanoskaligen Teilchen. Die Teilchengrößenverteilung liegt zwischen 300 nm und 800 nm. Morphologisch gesehen ist die Teilchenform als würfelförmig zu beschreiben. Eine repräsentative rasterelektronenmikroskopische Aufnahme zeigt Figur 17.

Grobe Si₃N₄ Partikel im Nanometerbereich ergeben Systeme mit einem recht einheitlichen Verlauf bis ca. 15 Gew.-% und einem deutlich geringeren Anstieg als bei SiC als Hartstoff.

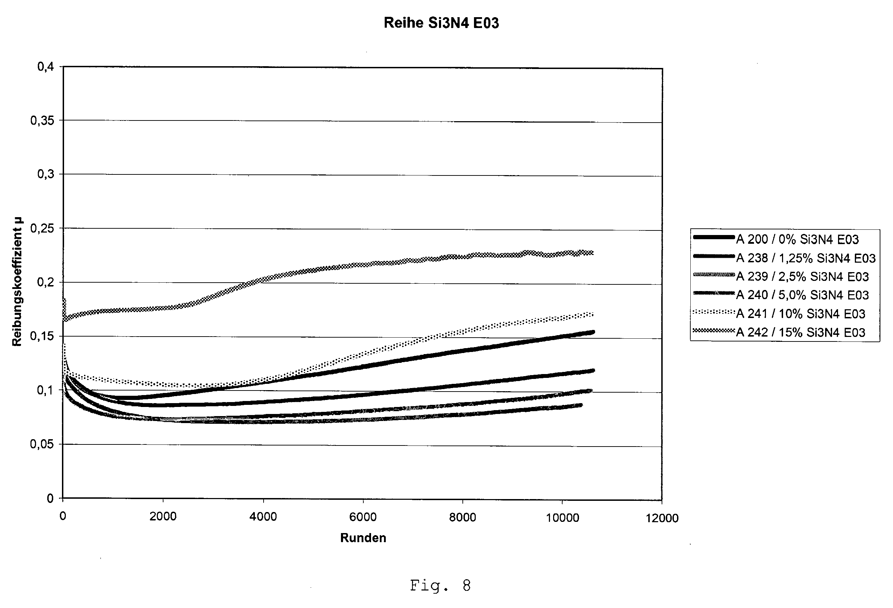

Die Tabelle 6 und Figur 8 zeigen den Einfluss des Hartstoffes Si₃N₄ E03 mit submikroskaligen Teilchen. Die Teilchengrößenverteilung liegt zwischen 400 nm und 900 nm. Morphologisch gesehen ist die Teilchenform als würfelförmig zu beschreiben. Eine repräsentative rasterelektronenmikroskopische Aufnahme zeigt Figur 18.

Si₃N₄ Partikel im Submikrometerbereich ergeben Systeme mit einem recht einheitlichen Verlauf bis ca. 10 Gew.-% und einem deutlich geringeren Anstieg als bei SiC als Hartstoff.

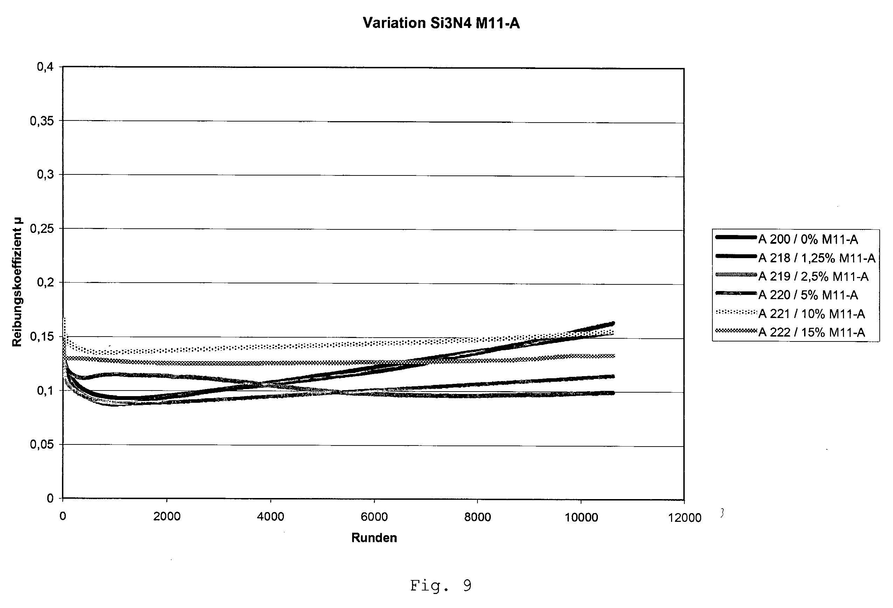

Die Tabelle 7 und Figur 9 zeigen den Einfluss des Hartstoffes Si₃N₄ M11-A mit submikro- bis mikroskaligen Teilchen. Die Teilchengrößenverteilung ist breit und liegt zwischen 100 nm und 2 µm. Morphologisch gesehen ist die Teilchenform als unförmig zu beschreiben. Eine repräsentative rasterelektronenmikroskopische Aufnahme zeigt Figur 19.

Systeme mit Si₃N₄-Hartstoff breiter Teilchengrößenverteilung ergeben ebenfalls eine starke Vergleichmäßigung des Gleitkoeffizienten über die gesamte Belastungsstrecke.

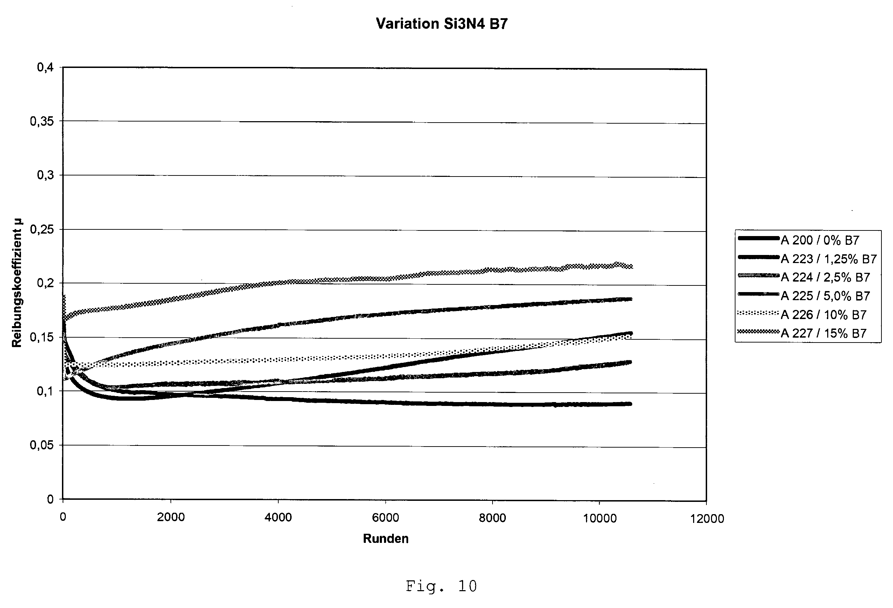

Die Tabelle 8 und Figur 10 zeigen den Einfluss des Hartstoffes Si₃N₄ B7 mit mikroskaligen Teilchen.

Bis ca. 10 Gew.-% verhält sich die Systemreihe mit Si₃N₄ B7 analog zu den Reihen mit E05 und E03.

Zusammenfassend lässt sich feststellen, dass die Siliziumnitride als Hartstoffe, wegen ihrer nicht zu extrem hohen Härte im Vergleich zu Siliziumcarbid, bei der Ausbildung des Transferfilms weniger abrasiv wirken, wodurch eine Verstetigung eines niedrigen Gleitkoeffizienten über eine lange Belastungsstrecke erreicht wird. Durch die geringere abrasive Wirkung werden auch die Pigmentteilchen nicht zerstört und können ihre tribologische Wirkung im oben beschriebenen, erfindungsgemäßen Sinne ausüben.

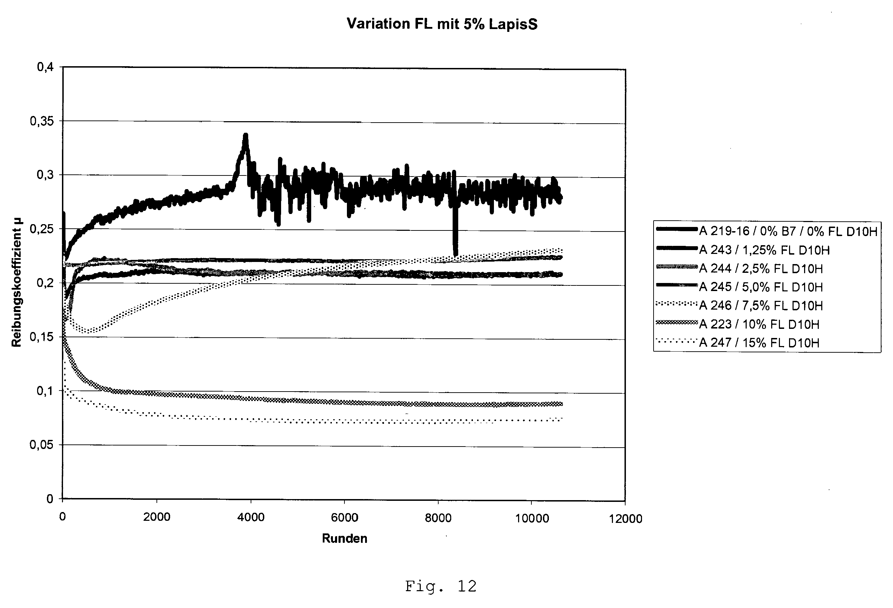

Die Systemreihe mit Si₃N₄ B7 zeigt ein ausgewogenes Verhalten bei konstantem FL D10H Gehalt von 10 Gew.-%. Um die optimale Konzentration dieser Komponente im Hinblick auf die tribologischen Eigenschaften herauszufinden wurde basierend auf einer Si₃N₄ B7 Konzentration von 1,25 Gew.-% eine Variation des FL D10H Gehaltes vorgenommen (Tabelle 10, Figur 12).

Es zeigt sich, dass in dieser Systemreihe ab 10 Gew.-% FL D10H (A223) die gewünschte tribologische Wirkung einsetzt. Um eine rein hydrodynamische Schmierwirkung des FL D10H auszuschließen, wurden für die parallele Systemreihe mit Si₃N₄ M11-A als Hartstoff im Vergleich zum System A219 (analoge Zusammensetzung zu A223) systematisch einzelne Komponenten in das Ausgangs-Polymermatrixmaterial zugegeben.

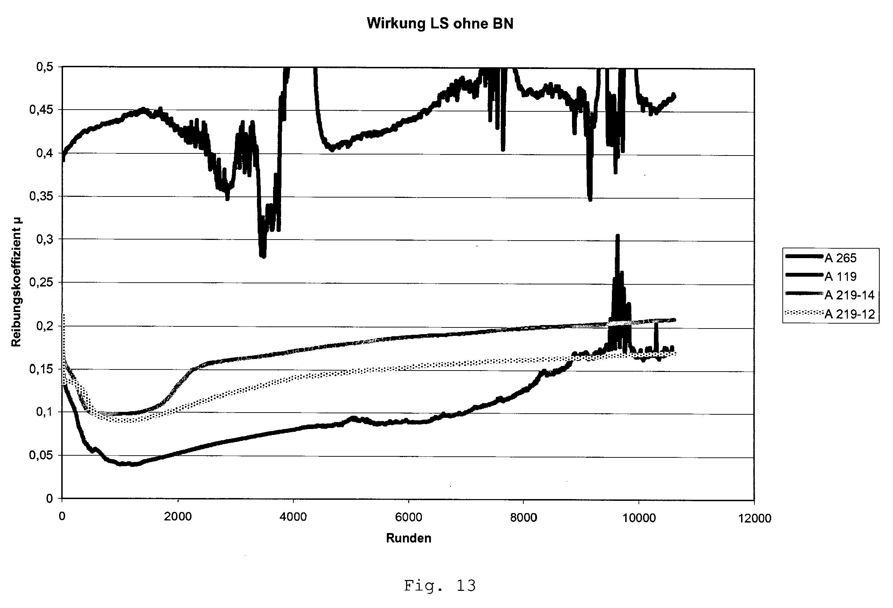

Die Tabellen 10 und 11 und Figuren 12 und 13 zeigen den Einfluss bestimmter Einzelkomponenten, die in systematischer Weise zum Gesamtkompositmaterial zusammengesetzt werden.

Diese Vergleichsreihen zeigen ein analoges Bild wie schon zuvor bei SiC als Hartstoff beobachtet. Die Kombination von FL mit Lapis S führt zu einer deutlichen Absenkung des Anfangsreibwertes aber ohne eine besondere Verschleißbeständigkeit (A274). Die zusätzliche Additivierung mit Festkörperschmierstoff BN 110 führt zu einer deutlichen Verringerung des Verschleisses bei niedrigem Anfangsreibwert (A200). Die beste Balance bezüglich Gleireibungskoeffizient und Verschleiß erhält man durch weiterhin zusätzliche Kombination von Si₃N₄ als Hartstoff (A219).

### Benetzungsverhalten und Abrasion

Die Tabellen 13 bis 16 zeigen Zusatzeigenschaften der tribologischen Kompositmaterialien, wie das Benetzungsverhalten, die Abrasionsbeständigkeit in Abhängigkeit vom Gehalt an Hartstoffteilchen und die Korrosionsschutzwirkung insbesondere in Abhängigkeit vom Gehalt an Plättchen.

Aus den gezeigten Daten geht hervor, dass die Systeme sowohl hydrophobe, als auch oleophobe Eigenschaften zeigen, d.h. die Oberflächenmodifizierenden Komponenten für die eingesetzten Teilchen reichern sich an der Luftseite der Beschichtungen an. Dabei wird ein Teil der Plättchen durch die hydrophobe Oberflächenmodifizierung an die Schichtoberfläche gezogen. Dies ist in Figur 22 belegt.

### Korrosion

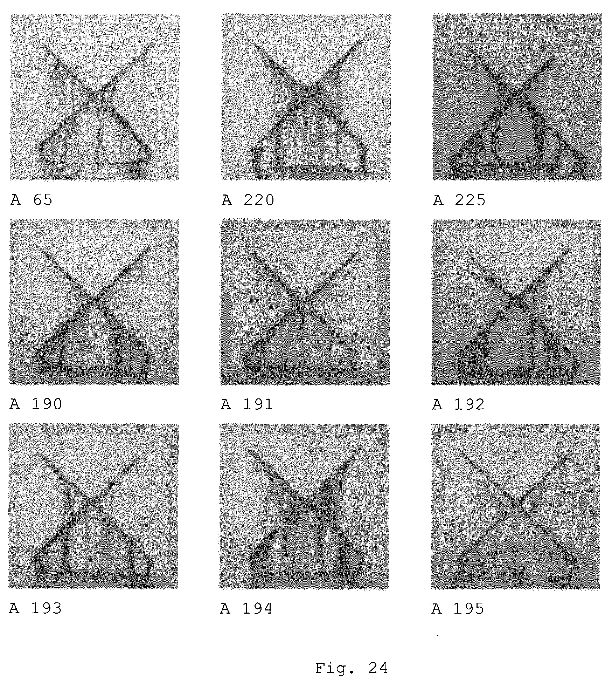

Figur 24 zeigt die Ergebnisse eines neutralen Saltzsprüh-Tests.

Die gezeigten Beispiele belegen die Korrosionsschutzwirkung der erzeugten tribologischen Schichten. Auf der Fläche ist keine Blasenbildung zu beobachten. An der Ritzkante des Kreuzritzes tritt keine Unterwanderung der Beschichtung auf. Ursächlich können der feinstrukturierte Aufbau des gesamten Komposits (Barrierewirkung) und die exzellente Haftung zum Untergrund dafür verantwortlich gemacht werden.

**Tabelle 1: Variation SiC UF-10 bei 5% Lapis S und 10% FL**

| | BN 110 | Lapis S | SiC | FL D10H | BAPPS | PMDA |
|---|---|---|---|---|---|---|
| System | Gew.-% | Gew.-% | Gew.-% | Gew.-% | Gew.-% | Gew.-% |
| A200 | 30 | 5 | 0 | 10 | 37,97 | 17, 03 |
| A201 | 30 | 5 | 1,25 | 10 | 37,10 | 16, 65 |
| A202 | 30 | 5 | 2,5 | 10 | 36,25 | 16,25 |
| A169 | 30 | 5 | 5 | 10 | 34,52 | 15,48 |
| A204 | 30 | 5 | 10 | 10 | 31,07 | 13, 93 |
| A205 | 30 | 5 | 15 | 10 | 27, 62 | 12,38 |
| A206 | 30 | 5 | 20 | 10 | 24,15 | 10, 85 |

**Tabelle 2: Variation Lapis S im SiC-System**

| | BN 110 | Lapis S | SiC | FL D10H | BAPPS | PMDA |
|---|---|---|---|---|---|---|
| System | Gew.-% | Gew.-% | Gew.-% | Gew.-% | Gew.-% | Gew.-% |
| A65 | 30 | 0 | 5 | 10 | 37, 97 | 17,03 |
| A190 | 30 | 1,25 | 5 | 10 | 37,10 | 16, 65 |
| A191 | 30 | 2,5 | 5 | 10 | 36,25 | 16,25 |
| A192 | 30 | 3,5 | 5 | 10 | 35,53 | 15, 97 |
| A193 | 30 | 5 | 5 | 10 | 34,52 | 15,48 |
| A194 | 30 | 10 | 5 | 10 | 31, 07 | 13,93 |
| A195 | 30 | 15 | 5 | 10 | 27, 62 | 12,38 |

**Tabelle 3: Systematischer Aufbau SiC-System; A193 = erfindungsgemäße Zusammensetzung; A113, A119, A274 und A65 = Vergleichsbeispiele.**

| | BN 110 | Lapis S | SiC | FL D10H | BAPPS | PMDA |
|---|---|---|---|---|---|---|
| System | Gew.-% | Gew.-% | Gew.-% | Gew.-% | Gew.-% | Gew.-% |
| A265 | 0 | 0 | 0 | 0 | 69,10 | 30,90 |
| A269 | 30 | 0 | 0 | 0 | 48,30 | 27,70 |
| A113 | 35 | 0 | 0 | 0 | 44,92 | 20,08 |
| A119 | 0 | 0 | 0 | 12,4 | 60,49 | 27,11 |
| A274 | 30 | 0 | 0 | 10 | 41,46 | 18,54 |
| A65 | 30 | 0 | 5 | 10 | 37,97 | 17,03 |
| A193 | 30 | 5 | 5 | 10 | 34,55 | 15,45 |

**Tabelle 4: Variation Si₃N₄ nano70 Gehalt**

| | BN 110 | Lapis S | n-Si₃N₄ | FL D10H | BAPPS | PMDA |
|---|---|---|---|---|---|---|
| System | Gew.-% | Gew.-% | Gew.-% | Gew.-% | Gew.-% | Gew.-% |
| A200 | 30 | 5 | 0 | 10 | 37,97 | 17,03 |
| A228 | 30 | 5 | 1,25 | 10 | 37,10 | 16,65 |
| A229 | 30 | 5 | 2,5 | 10 | 36,25 | 16,25 |
| A230 | 30 | 5 | 5 | 10 | 34,52 | 15,48 |
| A231 | 30 | 5 | 10 | 10 | 31,07 | 13,93 |
| A232 | 30 | 5 | 15 | 10 | 27,62 | 12,38 |

**Tabelle 5: Variation Si₃N₄ E05**

| | BN 110 | Lapis S | Si₃N₄ E05 | FL D10H | BAPPS | PMDA |
|---|---|---|---|---|---|---|
| System | Gew.-% | Gew.-% | Gew.-% | Gew.-% | Gew.-% | Gew.-% |
| A200 | 30 | 5 | 0 | 10 | 37,97 | 17,03 |
| A233 | 30 | 5 | 1,25 | 10 | 37,10 | 16,65 |
| A234 | 30 | 5 | 2,5 | 10 | 36,25 | 16,25 |
| A235 | 30 | 5 | 5 | 10 | 34,52 | 15,48 |
| A236 | 30 | 5 | 10 | 10 | 31,07 | 13,93 |
| A237 | 30 | 5 | 15 | 10 | 27,62 | 12,38 |

**Tabelle 6: Variation Si₃N₄ E03**

| | BN 110 | Lapis S | Si₃N₄ E03 | FL D10H | BAPPS | PMDA |
|---|---|---|---|---|---|---|
| System | Gew.-% | Gew.-% | Gew.-% | Gew.-% | Gew.-% | Gew.-% |
| A200 | 30 | 5 | 0 | 10 | 37,97 | 17,03 |
| A238 | 30 | 5 | 1,25 | 10 | 37,10 | 16,65 |
| A239 | 30 | 5 | 2,5 | 10 | 36,25 | 16,25 |
| A240 | 30 | 5 | 5 | 10 | 34,52 | 15,48 |
| A241 | 30 | 5 | 10 | 10 | 31,07 | 13,93 |
| A242 | 30 | 5 | 15 | 10 | 27,62 | 12,38 |

**Tabelle 7: Variation Si₃N₉ M11-A (breite Verteilung) Gehalt**

| | BN 110 | Lapis S | Si₃N₄-M | FL D10H | BAPPS | PMDA |
|---|---|---|---|---|---|---|
| System | Gew.-% | Gew.-% | Gew.-% | Gew.-% | Gew.-% | Gew.-% |
| A200 | 30 | 5 | 0 | 10 | 37, 97 | 17, 03 |
| A218 | 30 | 5 | 1,25 | 10 | 37,10 | 16, 65 |
| A219 | 30 | 5 | 2,5 | 10 | 36,25 | 16,25 |
| A220 | 30 | 5 | 5 | 10 | 34,52 | 15,48 |
| A221 | 30 | 5 | 10 | 10 | 31, 07 | 13, 93 |
| A222 | 30 | 5 | 15 | 10 | 27,62 | 12,38 |

**Tabelle 8: Variation Si₃N₄ B7 (3,0 µm) Gehalt**

| | BN 110 | Lapis S | Si₃N₄-B7 | FL D10H | BAPPS | PMDA |
|---|---|---|---|---|---|---|
| System | Gew.-% | Gew.-% | Gew.-% | Gew.-% | Gew.-% | Gew.-% |
| A200 | 30 | 5 | 0 | 10 | 37, 97 | 17,03 |
| A223 | 30 | 5 | 1,25 | 10 | 37,10 | 16, 65 |
| A224 | 30 | 5 | 2,5 | 10 | 36,25 | 16,25 |
| A225 | 30 | 5 | 5 | 10 | 34,52 | 15,48 |
| A226 | 30 | 5 | 10 | 10 | 31, 07 | 13, 93 |
| A227 | 30 | 5 | 15 | 10 | 27, 62 | 12,38 |

**Tabelle 9: Variation FL D10H-Gehalt im System ohne Hartstoff**

| | BN 110 | Lapis S | Si₃N₄ | FL D10H | BAPPS | PMDA |
|---|---|---|---|---|---|---|
| System | Gew.-% | Gew.-% | Gew.-% | Gew.-% | Gew.-% | Gew.-% |
| A269 | 30 | 0 | 0 | 0 | 48,30 | 27,70 |
| A270 | 30 | 0 | 0 | 1,25 | 47,44 | 21,31 |
| A271 | 30 | 0 | 0 | 2,5 | 46, 58 | 20, 92 |
| A272 | 30 | 0 | 0 | 5, 0 | 44, 85 | 20,15 |
| A273 | 30 | 0 | 0 | 7,5 | 43,13 | 19,37 |
| A274 | 30 | 0 | 0 | 10,0 | 41,40 | 18,60 |
| A275 | 30 | 0 | 0 | 12,5 | 39, 68 | 17,82 |
| A276 | 30 | 0 | 0 | 15,0 | 37, 95 | 17,05 |

**Tabelle 10: Variation FL D10H-Gehalt im Si₃N₄ B7 (3,0 µm) System**

| | BN 110 | Lapis S | Si₃N₄-B7 | FL D10H | BAPPS | PMDA |
|---|---|---|---|---|---|---|
| System | Gew.-% | Gew.-% | Gew.-% | Gew.-% | Gew.-% | Gew.-% |
| A219-16 | 30 | 5 | 0 | 0 | 44,92 | 20,08 |
| A243 | 30 | 5 | 1,25 | 1,25 | 43,19 | 19,31 |
| A244 | 30 | 5 | 1,25 | 2,5 | 42,32 | 18, 93 |
| A245 | 30 | 5 | 1,25 | 5,0 | 40, 60 | 18,15 |
| A246 | 30 | 5 | 1,25 | 7,5 | 38,87 | 17,38 |
| A223 | 30 | 5 | 1,25 | 10 | 37,10 | 16, 65 |
| A247 | 30 | 5 | 1,25 | 15 | 33,69 | 15,06 |

**Tabelle 11: Systematischer Aufbau Si₃N₄ M11-A - System ohne BN**

| | BN 110 | Lapis S | Si₃N₄ M11 | FL D10H | BAPPS | PMDA |
|---|---|---|---|---|---|---|
| System | Gew.-% | Gew.-% | Gew.-% | Gew.-% | Gew.-% | Gew.-% |
| A2 65 | 0 | 0 | 0 | 0 | 69,10 | 30, 90 |
| A119 | 0 | 0 | 0 | 12,4 | 60,49 | 27,11 |
| A219-14 | 0 | 5 | 0 | 10 | 58, 74 | 26,26 |
| A219-12 | 0 | 5 | 2,5 | 10 | 57, 01 | 25,49 |

**Tabelle 12: Systematischer Aufbau Si₃N₄ M11-A - System mit BN**

| | BN 110 | Lapis S | Si₃N₄ M11 | FL D10H | BAPPS | PMDA |
|---|---|---|---|---|---|---|
| System | Gew.-% | Gew.-% | Gew.-% | Gew.-% | Gew.-% | Gew.-% |
| A269 | 30 | 0 | 0 | 0 | 48, 30 | 27, 70 |
| A219-16 | 30 | 5 | 0 | 0 | 44, 92 | 20, 08 |
| A219-15 | 30 | 5 | 2,5 | 0 | 43, 19 | 19, 31 |
| A274 | 30 | 0 | 0 | 10 | 41, 46 | 18, 54 |
| A200 | 30 | 5 | 0 | 10 | 37, 97 | 17, 03 |
| A219 | 30 | 5 | 2, 5 | 10 | 36, 25 | 16, 25 |

**Tabelle 13: 5 Gew.-% Lapis S, 30 % BN 110, 10 % FL D10H**

| System | Si₃N₄-M11 (1,3 µm) / Gew.-% | KW (H₂O) initial | KW (HD) initial | Gewichtsverlust nach 1000 Zykl. Taber (CS-17) / mg | KW (H₂O) nach Taber | KW (HD) nach Taber |
|---|---|---|---|---|---|---|
| A65 | 0 | 94 | 62 | 33 | 99 | 47 |
| A218 | 1,25 | 101 | 66 | 61 | 102 | 46 |
| A219 | 2,5 | 100 | 67 | 77 | 100 | 51 |
| A220 | 5 | 104 | 70 | 62 | 103 | 45 |
| A221 | 10 | 91 | 65 | 71 | 93 | 51 |
| A222 | 15 | 129 | 81 | 70 | 100 | 50 |

**Tabelle 14: 5 Gew.-% Lapis S, 30 % BN 110, 10 % FL D10H**

| System | Si₃N₄-B7 (3, 0 µm) / Gew.-% | KW (H₂O) initial | KW (HD) initial | Gewichtsverlust nach 1000 Zykl. Taber (CS-17) / mg | KW (H₂O) nach Taber | KW (HD) nach Taber |
|---|---|---|---|---|---|---|
| A65 | 0 | 94 | 62 | 33 | 99 | 47 |
| A223 | 1,25 | 109 | 71 | 60 | 103 | 49 |
| A224 | 2,5 | 107 | 71 | 61 | 95 | 50 |
| A225 | 5 | 106 | 67 | 58 | 99 | 53 |
| A226 | 10 | 106 | 75 | 43 | 94 | 61 |
| A227 | 15 | 129 | 82 | 59 | 100 | 50 |

**Tabelle 15: 5 Gew.-% SiC, 30 % BN, 10 % FL D10H**

| System | Lapis S / Gew.-% | KW (H₂O) initial | KW (HD) initial | Gewichtsverlust nach 1000 Zykl. Taber (CS-17) / mg | KW (H₂O) nach Taber | KW (HD) nach Taber |
|---|---|---|---|---|---|---|
| A65 | 0 | 94 | 62 | 33 | 99 | 47 |
| A190 | 1,25 | 102 | 66 | 50 | 100 | 50 |
| A191 | 2,5 | 103 | 67 | 36 | 100 | 46 |
| A192 | 3,5 | 103 | 70 | 60 | 100 | 53 |
| A193 | 5 | 108 | 71 | 44 | 99 | 50 |
| A194 | 10 | 114 | 73 | 37 | 103 | 50 |
| A195 | 15 | 127 | 80 | 60 | 104 | 50 |

**Tabelle 16: Vergleichssysteme**

| System | BN / Gew.-% | Lapis S / Gew.-% | Si₃N₄ M11-A / Gew.-% | FL / Gew.-% | KW (H₂O) initial | KW (HD) initial | Gewichtsverlust nach 1000 Zykl. Taber(CS-17)/ mg | KW (H₂O) nach Taber | KW (HD) nach Taber |
|---|---|---|---|---|---|---|---|---|---|
| 219 | 30 | 5 | 2,5 | 10 | 91 | 63 | 5,1 | 95 | 49 |
| 219-12 | 0 | 5 | 2,5 | 10 | 92 | 64 | 1, 6 | 93 | 56 |
| 200 | 30 | 5 | 0 | 10 | 83 | 61 | 6,8 | 100 | 50 |
| 219-14 | 0 | 5 | 0 | 10 | 96 | 63 | 1,5 | 94 | 57 |
| 219-15 | 30 | 5 | 2,5 | 0 | 87 | 45 | 5,2 | 97 | 24 |
| 219-16 | 30 | 5 | 0 | 0 | 88 | 44 | 4,0 | 99 | 20 |

### zitierte Literatur

US4694038A
US5789523A
WO2002005293A2
US20040229759A1
US4898905A
US3809442
EP1350817A1
WO2005010107A1
WO2005010107A1
EP1718690

## Patentansprüche

1. Zusammensetzung für die Herstellung eines tribologischen Kompositmaterials umfassend
a) mindestens einen plättchenförmigen Festkörperschmierstoff;
b) mindestens einen Typ anorganischer plättchenförmiger Pigmentteilchen, wobei die Pigmentteilchen eine Dicke von 0,5 µm bis 2 µm und ein mittleres Aspektverhältnis 10 aufweisen;
c) mindestens eine oberflächenaktive Verbindung, welche über mindestens eine hydrophile Gruppe und mindestens eine hydrophobe Gruppe verfügt, wobei die oberflächenaktive Verbindung ausgewählt ist aus der Gruppe umfassend Ammoniumalkylverbindungen, Phosphoniumalkylverbindungen, Sulfoniumalkylverbindungen, Imidazoliniumverbindungen, Pyridiniumverbindungen, Pyrrolidiniumverbindungen, ionische Flüssigkeiten, funktionalisierte fluorhaltige Polymere, Polyether und funktionalisierte Polysiloxane;
d) ein härtbares Bindemittelsystem umfassend mindestens ein organisches Polymer oder Oligomer mit einer oder mehreren funktionellen Gruppen oder eine Vorstufe davon.

2. Zusammensetzung nach Anspruch 1, **dadurch gekennzeichnet, dass**
der Festkörperschmierstoff eine Dicke zwischen 100 nm und 1000 nm und einem Aspektverhältnis > 5 aufweist.

3. Zusammensetzung nach einem der Ansprüche 1 bis 2, **dadurch gekennzeichnet, dass**
die Zusammensetzung als weitere Komponente anorganische Teilchen enthält.

4. Zusammensetzung nach Anspruch 3, **dadurch gekennzeichnet, dass**
die anorganischen Teilchen eine Härte von 1.000 MPa bis 3.500 MPa aufweisen.

5. Zusammensetzung nach einem der Ansprüche 1 bis 4, **dadurch gekennzeichnet, dass**
der Festkörperschmierstoff ausgewählt ist aus der Gruppe umfassend natürlicher Graphit, synthetischer Graphit, Graphen, hexagonales Bornitrid, turbostratisches Bornitrid, Molybdändisulfid und/oder Wolframdisulfid.

6. Zusammensetzung nach einem der Ansprüche 1 bis 5, **dadurch gekennzeichnet, dass**
zusätzlich noch ein organischer Festkörperschmierstoff ausgewählt aus der Gruppe umfassend Perfluoropolymere, Polytetrafluorethylen (PTFE) und/oder Polyethylen zugegeben wird.

7. Zusammensetzung nach einem der Ansprüche 1 bis 6, **dadurch gekennzeichnet, dass**
die Oberfläche der Pigmentteilchen mindestens teilweise aus einem Übergangsmetalloxid besteht.

8. Zusammensetzung nach Anspruch 7, **dadurch gekennzeichnet, dass** das Übergangsmetalloxid ausgewählt ist aus der Gruppe umfassend TiO₂, ZrO₂, ZnO und FeOₓ.

9. Zusammensetzung nach einem der Ansprüche 1 bis 8, **dadurch gekennzeichnet, dass** das Bindemittelsystem ein Epoxidharz, Phenolharz, Phenoxyharz, Polyol, ein blockiertes oder unblockiertes Polyisocyanat, ein Polyimid, ein Polyamidimid, Polyamid, Polybenzimidazol, einen Polyester, Polyharnstoff, Polyurethan, ein Polyepoxid, ein Polyamin und/oder ein Polyacrylat oder Vorstufen davon umfasst.

10. Zusammensetzung nach einem der Ansprüche 1 bis 9,
**dadurch gekennzeichnet, dass**
das Bindemittelsystem eine Di- oder Tetracarbonsäure, deren Anhydrid oder ein anderes Derivat davon als Carbonsäurekomponente und ein Di-, Tri- oder Tetraamin als Aminkomponente umfasst, wobei mindestens eine Komponente aromatisch ist.

11. Verfahren zur Herstellung eines tribologischen Kompositmaterials umfassend folgende Schritte:
a) Aufbringen einer Zusammensetzung nach einem der Ansprüche 1 bis 10 auf ein Substrat;
b) thermische und/oder photochemische Härtung der Zusammensetzung.

12. Verfahren nach Anspruch 11, **dadurch gekennzeichnet, dass** die Zusammensetzung nach Schritt a) mit einem Verfahren erhalten wird, welches folgende Schritte umfasst:
a1) Herstellen einer Mischung aus mindestens einen plättchenförmigen Festkörperschmierstoff und einer oberflächenaktiven Verbindung in einem für das Bindemittelsystem geeigneten Lösungsmittel;
a2) Zugabe von des härtbaren Bindemittelsystems und mindestens eines Typs anorganischer plättchenförmiger Pigmentteilchen;
a3) Aufbringen der erhaltenen Mischung auf eine Substrat.

13. Substrat mit tribologischer Kompositbeschichtung aus einer gehärteten Zusammensetzung nach einem der Ansprüche 1 bis 10.

## Claims

1. Composition for producing a tribological composite material, comprising
a) at least one platelet-shaped, solid-state lubricant;
b) at least one type of inorganic, platelet-shaped pigment particles, wherein the pigment particles have a thickness of from 0.5 µm to 2 µm and an average aspect ratio of ≥ 10;
c) at least one surface-active compound possessing at least one hydrophilic group and at least one hydrophobic group, wherein the surface-active compound is selected from the group encompassing ammonioalkyl compounds, phosphonioalkyl compounds, sulfonioalkyl compounds, imidazolinium compounds, pyridinium compounds, pyrrolidinium compounds, ionic liquids, functionalized, fluorine-containing polymers, polyethers, and functionalized polysiloxanes;
d) a curable binder system comprising at least one organic polymer or oligomer having one or more functional groups, or a precursor thereof.

2. Composition according to Claim 1, **characterized in that**
the solid-state lubricant has a thickness of between 100 nm and 1000 nm and an aspect ratio of > 5.

3. Composition according to either of Claims 1 and 2,
**characterized in that**
the composition comprises inorganic particles as a further component.

4. Composition according to Claim 3, **characterized in that**
the inorganic particles have a hardness of from 1000 MPa to 3500 MPa.

5. Composition according to any of Claims 1 to 4,
**characterized in that**
the solid-state lubricant is selected from the group encompassing natural graphite, synthetic graphite, graphene, hexagonal boron nitride, turbostratic boron nitride, molybdenum disulfide and/or tungsten disulfide.

6. Composition according to any of Claims 1 to 5,
**characterized in that**
additionally an organic, solid-state lubricant is further added, selected from the group encompassing perfluoropolymers, polytetrafluoroethylene (PTFE) and/or polyethylene.

7. Composition according to any of Claims 1 to 6,
**characterized in that**
the surface of the pigment particles consists at least partly of a transition metal oxide.

8. Composition according to Claim 7, **characterized in that** the transition metal oxide is selected from the group encompassing TiO₂, ZrO₂, ZnO, and FeOₓ.

9. Composition according to any of Claims 1 to 8, **characterized in that** the binder system comprises an epoxy resin, phenolic resin, phenoxy resin, polyol, a blocked or nonblocked polyisocyanate, a polyimide, a polyamideimide, polyamide, polybenzimidazole, a polyester, polyurea, polyurethane, a polyepoxide, a polyamine and/or a polyacrylate, or precursors thereof.

10. Composition according to any of Claims 1 to 9,
**characterized in that**
the binder system comprises a dicarboxylic or tetracarboxylic acid, the anhydride thereof, or another derivative thereof, as carboxylic acid component, and comprises a diamine, triamine, or tetraamine as amine component, at least one component being aromatic.

11. Method for producing a tribological composite material, comprising the following steps:
a) applying a composition according to any of Claims 1 to 10 to a substrate;
b) thermally and/or photochemically curing the composition.

12. Method according to Claim 11, **characterized in that** the composition according to step a) is obtained with a method which comprises the following steps:
a1) preparing a mixture of at least one platelet-shaped, solid-state lubricant and a surface-active compound in a solvent suitable for the binder system;
a2) adding the curable binder system and at least one type of inorganic, platelet-shaped pigment particles;
a3) applying the resulting mixture to a substrate.

13. Substrate with tribological composite coating composed of a cured composition according to any of Claims 1 to 10.

## Revendications

1. Composition pour la fabrication d'un matériau composite tribologique, comprenant
a) au moins un lubrifiant solide plaquettaire ;
b) au moins un type de particules de pigment inorganiques plaquettaires, les particules de pigment présentant une épaisseur de 0,5 µm à 2 µm et un rapport de longueur moyen ≥ 10 ;
c) au moins un composé tensioactif, qui dispose d'au moins un groupe hydrophile et d'au moins un groupe hydrophobe, le composé tensioactif étant choisi dans le groupe comprenant les composés alkyliques d'ammonium, les composés alkyliques de phosphonium, les composés alkyliques de sulfonium, les composés d'imidazolinium, les composés de pyridinium, les composés de pyrrolidinium, les liquides ioniques, les polymères fluorés fonctionnalisés, les polyéthers et les polysiloxanes fonctionnalisés ;
d) un système de liant durcissable comprenant au moins un polymère ou oligomère organique contenant un ou plusieurs groupes fonctionnels ou un précurseur de celui-ci.

2. Composition selon la revendication 1, **caractérisée en ce que** le lubrifiant solide présente une épaisseur comprise entre 100 nm et 1 000 nm et un rapport de longueur > 5.

3. Composition selon l'une quelconque des revendications 1 à 2, **caractérisée en ce que** la composition contient en tant que composant supplémentaire des particules inorganiques.

4. Composition selon la revendication 3, **caractérisée en ce que** les particules inorganiques présentent une dureté de 1 000 MPa à 3 500 MPa.

5. Composition selon l'une quelconque des revendications 1 à 4, **caractérisée en ce que** le lubrifiant solide est choisi dans le groupe comprenant le graphite naturel, le graphite synthétique, le graphène, le nitrure de bore hexagonal, le nitrure de bore turbostratique, le disulfure de molybdène et/ou le disulfure de tungstène.

6. Composition selon l'une quelconque des revendications 1 à 5, **caractérisée en ce qu'**un lubrifiant solide organique choisi dans le groupe comprenant les perfluoropolymères, le polytétrafluoroéthylène (PTFE) et/ou le polyéthylène est ajouté en outre.

7. Composition selon l'une quelconque des revendications 1 à 6, **caractérisée en ce que** la surface des particules de pigment est au moins en partie constituée d'un oxyde de métal de transition.

8. Composition selon la revendication 7, **caractérisée en ce que** l'oxyde de métal de transition est choisi dans le groupe comprenant TiO₂, ZrO₂, ZnO et FeOₓ.

9. Composition selon l'une quelconque des revendications 1 à 8, **caractérisée en ce que** le système de liant comprend une résine époxyde, une résine de phénol, une résine phénoxy, un polyol, un polyisocyanate bloqué ou non bloqué, un polyimide, un polyamide-imide, un polyamide, un polybenzimidazole, un polyester, une polyurée, un polyuréthane, un polyépoxyde, une polyamine et/ou un polyacrylate ou leurs précurseurs.

10. Composition selon l'une quelconque des revendications 1 à 9, **caractérisée en ce que** le système de liant comprend un acide di- ou tétracarboxylique, son anhydride ou un autre dérivé de celui-ci en tant que composant acide carboxylique, et une di-, tri- ou tétraamine en tant que composant amine, au moins un composant étant aromatique.

11. Procédé de fabrication d'un matériau composite tribologique comprenant les étapes suivantes :
a) l'application d'une composition selon l'une quelconque des revendications 1 à 10 sur un substrat ;
b) le durcissement thermique et/ou photochimique de la composition.

12. Procédé selon la revendication 11, **caractérisé en ce que** la composition selon l'étape a) est obtenue par un procédé qui comprend les étapes suivantes :
a1) la fabrication d'un mélange d'au moins un lubrifiant solide plaquettaire et d'un composé tensioactif dans un solvant approprié pour le système de liant ;
a2) l'ajout du système de liant durcissable et d'au moins un type de particules de pigment inorganiques plaquettaires ;
a3) l'application du mélange obtenu sur un substrat.

13. Substrat à revêtement composite tribologique en une composition durcie selon l'une quelconque des revendications 1 à 10.
